(19) Europäisches Patentamt / European Patent Office / Office européen des brevets

(11) **EP 1 145 482 B1**

(12) **FASCICULE DE BREVET EUROPEEN**

(45) Date de publication et mention
de la délivrance du brevet:
**02.01.2019 Bulletin 2019/01**

(21) Numéro de dépôt: **00901658.5**

(22) Date de dépôt: **27.01.2000**

(51) Int Cl.:
***H04L 9/32*** *(2006.01)*

(86) Numéro de dépôt international:
**PCT/FR2000/000190**

(87) Numéro de publication internationale:
**WO 2000/045550 (03.08.2000 Gazette 2000/31)**

(54) **PROCÉDÉ DESTINÉ À PROUVER L'AUTHENTICITÉ D'UNE ENTITÉ OU L'INTÉGRITÉ D'UN MESSAGE AU MOYEN D'UN EXPOSANT PUBLIC ÉGAL À UNE PUISSANCE DE DEUX**

VERFAHREN ZUM NACHWEIS DER AUTENTIZITÄT EINER EINHEIT ODER DER INTEGRITÄT EINER NACHRICHT MITTELS EINES ÖFFENTLICHEN EXPONENTEN, DER GLEICH EINER POTENZ VON ZWEI IST

METHOD FOR PROVING THE AUTHENTICITY OR INTEGRITY OF A MESSAGE BY MEANS OF A PUBLIC EXPONENT EQUAL TO THE POWER OF TWO

(84) Etats contractants désignés:
**AT BE CH CY DE DK ES FI FR GB GR IE IT LI LU MC NL PT SE**

(30) Priorité: **27.01.1999  FR 9901065**
**23.03.1999  FR 9903770**
**01.10.1999  FR 9912465**
**01.10.1999  FR 9912467**
**01.10.1999  FR 9912468**

(43) Date de publication de la demande:
**17.10.2001  Bulletin 2001/42**

(73) Titulaire: **Callahan Cellular L.L.C.**
**Wilmington, DE 19808 (US)**

(72) Inventeurs:
• **GUILLOU, Louis**
**F-35230 Bourgbarre (FR)**
• **QUISQUATER, Jean-Jacques**
**B-1640 Rhode Saint Genese (BE)**

(74) Mandataire: **Small, Gary James**
**Carpmaels & Ransford LLP**
**One Southampton Row**
**London WC1B 5HA (GB)**

(56) Documents cités:
**EP-A- 0 311 470     EP-A- 0 792 044**
**WO-A-89/11706     WO-A-96/33567**

• **QUISQUATER J -J ET AL: "FAST DECIPHERMENT ALGORITHM FOR RSA PUBLIC-KEY CRYPTOSYSTEM" ELECTRONICS LETTERS, vol. 18, no. 21, 14 octobre 1982 (1982-10-14), pages 905-907, XP000577331 ISSN: 0013-5194**

Remarques:
L'OMPI données de publication A3 ne sont pas actuellement disponibles.

EP 1 145 482 B1

## Description

Procédé destiné à prouver l'authenticité d'une entité ou l'intégrité d'un message au moyen d'un exposant public égal à une puissance de deux.

La présente invention concerne les procédés, les systèmes ainsi que les dispositifs destinés à prouver l'authenticité d'une entité et/ou l'intégrité et/ou l'authenticité d'un message.

Le brevet EP 0 311 470 B1 dont les inventeurs sont Louis Guillou et Jean-Jacques Quisquater décrit un tel procédé. On y fera ci-après référence en le désignant par les termes : "brevet GQ" ou " procédé GQ". Par la suite on désignera parfois par "GQ2", "invention GQ2" ou "technologie GQ2" la présente invention.

Selon le procédé GQ, une entité appelée " autorité de confiance " attribue une identité à chaque entité appelée " témoin " et en calcule la signature RSA; durant un processus de personnalisation, l'autorité de confiance donne identité et signature au témoin. Par la suite, le témoin proclame : *"Voici mon identité ; j'en connais la signature RSA."* Le témoin prouve sans la révéler qu'il connaît la signature RSA de son identité. Grâce à la clé publique de vérification RSA distribuée par l'autorité de confiance, une entité appelée " contrôleur " vérifie sans en prendre connaissance que la signature RSA correspond à l'identité proclamée. Les mécanismes utilisant le procédé GQ se déroulent " sans transfert de connaissance ". Selon le procédé GQ, le témoin ne connaît pas la clé privée RSA avec laquelle l'autorité de confiance signe un grand nombre d'identités.

La technologie GQ précédemment décrite fait appel à la technologie RSA. Mais si la technologie RSA dépend bel et bien de la factorisation du module n, cette dépendance n'est pas une équivalence, loin s'en faut, comme le démontrent les attaques dites "multiplicatives" contre les diverses normes de signature numérique mettant en oeuvre la technologie RSA.

L'objectif de la technologie GQ2 est double : d'une part, améliorer les performances par rapport à la technologie RSA ; d'autre part, éviter les problèmes inhérents à la technologie RSA. La connaissance de la clé privée GQ2 est équivalente à la connaissance de la factorisation du module n. Toute attaque au niveau des triplets GQ2 se ramène à la factorisation du module n : il y a cette fois équivalence. Avec la technologie GQ2, la charge de travail est réduite, tant pour l'entité qui signe ou qui s'authentifie que pour celle qui contrôle. Grâce à un meilleur usage du problème de la factorisation, tant en sécurité qu'en performance, la technologie GQ2 évite les inconvénients présentés par la technologie RSA.

Le procédé GQ met en oeuvre des calculs modulo des nombres de 512 bits ou davantage. Ces calculs concernent des nombres ayant sensiblement la même taille élevés à des puissances de l'ordre de $2^{16} + 1$. Or les infrastructures microélectroniques existantes, notamment dans le domaine des cartes bancaires, font usage de microprocesseurs auto-programmables monolithiques dépourvus de coprocesseurs arithmétiques. La charge de travail liée aux multiples opérations arithmétiques impliquées par des procédés tels que le procédé GQ, entraîne des temps de calcul qui dans certains cas s'avèrent pénalisant pour les consommateurs utilisant des cartes bancaires pour acquitter leurs achats. Il est rappelé ici, qu'en cherchant à accroître la sécurité des cartes de paiement, les autorités bancaires posent un problème particulièrement délicat à résoudre. En effet, il faut traiter deux questions apparemment contradictoires : augmenter la sécurité en utilisant des clés de plus en plus longues et distinctes pour chaque carte tout en évitant que la charge de travail n'entraîne des temps de calcul prohibitifs pour les utilisateurs. Ce problème prend un relief particulier dans la mesure où, en outre, il convient de tenir compte de l'infrastructure en place et des composants microprocesseurs existants.

La technologie GQ2 a pour objet d'apporter une solution à ce problème tout en renforçant la sécurité.

EP 0 792 044 divulgue un dispositif et un procédé pour l'authentification des droits d'accès d'un utilisateur à des ressources selon le principe Défi-Réponse.

Des aspects de l'invention sont repris dans les revendications indépendantes et des caractéristiques préférentielles sont reprises dans les revendications dépendantes.

### Procédé

Plus particulièrement, l'invention concerne un procédé destiné à prouver à une entité contrôleur,

- l'authenticité d'une entité et/ou
- l'intégrité d'un message **M** associé à cette entité.

Cette preuve est établie au moyen de tout ou partie des paramètres suivants ou dérivés de ceux-ci:

- **m** couples de valeurs privées $Q_1$, $Q_2$, ... $Q_m$ et publiques $G_1$, $G_2$, ... $G_m$ (**m** étant supérieur ou égal à 1),
- un module public **n** constitué par le produit de **f** facteurs premiers $p_1$, $p_2$, ... $p_f$ (**f** étant supérieur ou égal à 2),
- un exposant public **v** .

Ledit module, ledit exposant et lesdites valeurs sont liés par des relations du type :

$$G_i \cdot Q_i^v \equiv 1 \cdot \bmod n \ \text{ou} \ G_i \equiv Q_i^v \bmod n$$

Ledit exposant **v** est tel que

$$v = 2^k$$

où **k** est un paramètre de sécurité plus grand que 1.

Ladite valeur publique $G_i$ est le carré $g_i^2$ d'un nombre de base $g_i$ inférieur aux **f** facteurs premiers $p_1$, $p_2$, ... $p_f$. Le nombre de **base** $g_i$ est tel que :

les deux équations :

$$x^2 \equiv g_i \bmod n \quad \text{et} \quad x^2 \equiv -g_i \bmod n$$

n'ont pas de solution en x dans l'anneau des entiers modulo **n**
et tel que :
l'équation :

$$x^v \equiv g_i^2 \bmod n$$

a des solutions en x dans l'anneau des entiers modulo **n**.

Ledit procédé met en oeuvre selon les étapes ci-après définies une entité appelée témoin. Cette entité dispose des **f** facteurs premiers $p_i$ et/ou des paramètres des restes chinois des facteurs premiers et/ou du module public **n** et/ou des **m** valeurs privées $Q_i$ et/ou des **f.m** composantes $Q_{i,j}$ ($Q_{i,j} \equiv Q_i \bmod p_j$) des valeurs privées $Q_i$ et de l'exposant public **v** .

Le témoin calcule des engagements **R** dans l'anneau des entiers modulo **n**. Chaque engagement est calculé :

• soit en effectuant des opérations du type

$$R \equiv r^v \bmod n$$

où **r** est un aléa tel que **0 < r < n,**

• soit

•• en effectuant des opérations du type

$$R_i \equiv r_i^v \bmod p_i$$

où $r_i$ est un aléa associé au nombre premier $p_i$, tel que **0 < $r_i$ < $p_i$**, chaque $r_i$ appartenant à une collection d'aléas {$r_1$, $r_2$ , ... $r_f$},
•• puis en appliquant la méthode des restes chinois.

Le témoin reçoit un ou plusieurs défis **d**. Chaque défi **d** comporte **m** entiers $d_i$ ci-après appelés défis élémentaires. Le témoin calcule à partir de chaque défi **d** une réponse D,

• soit en effectuant des opérations du type :

$$D \equiv r \cdot Q_1^{d1} \cdot Q_2^{d2} \cdot \ldots Q_m^{dm} \bmod n$$

- soit

  •• en effectuant des opérations du type :

$$D_i \equiv r_i . Q_{i,1}{}^{d1} . Q_{i,2}{}^{d2} . \ldots Q_{i,m}{}^{dm} \bmod p_i$$

  •• puis en appliquant la méthode des restes chinois.

Ledit procédé est tel qu'il y a autant de réponses **D** que de défis **d** que d'engagements **R**. Chaque groupe de nombres **R, d, D** constitue un triplet noté **{R, d, D}**.

**Cas de la preuve de l'authenticité d'une entité**

Dans une première variante de réalisation le procédé selon l'invention est destiné à prouver l'authenticité d'une entité appelée démonstrateur à une entité appelée contrôleur. Ladite entité démonstrateur comprend le témoin. Lesdites entités démonstrateur et contrôleur exécutent les étapes suivantes:

**• étape 1 : acte d'engagement R**

A chaque appel, le témoin calcule chaque engagement **R** en appliquant le processus spécifié ci-dessus. Le démonstrateur transmet au contrôleur tout ou partie de chaque engagement **R.**

**• étape 2 : acte de défi d**

Le contrôleur, après avoir reçu tout ou partie de chaque engagement **R,** produit des défis **d** en nombre égal au nombre d'engagements **R** et transmet les défis **d** au démonstrateur.

**• étape 3 : acte de réponse D**

Le témoin calcule des réponses **D** à partir des défis **d** en appliquant le processus spécifié ci-dessus.

**• étape 4 : acte de contrôle**

Le démonstrateur transmet chaque réponse **D** au contrôleur.

**Premier cas : le démonstrateur a transmis une partie de chaque engagement R**

Dans le cas où le démonstrateur a transmis une partie de chaque engagement **R,** le contrôleur, disposant des **m** valeurs publiques **G₁, G₂, ... Gₘ,** calcule à partir de chaque défi **d** et de chaque réponse **D** un engagement reconstruit **R'** satisfaisant à une relation du type :

$$R' \equiv G_1{}^{d1} . G_2{}^{d2} . \ldots G_m{}^{dm} . D^v \bmod n$$

ou a une relation du type,

$$R' \equiv D^v / G_1{}^{d1} . G_2{}^{d2} . \ldots G_m{}^{dm} . \bmod n .$$

Le contrôleur vérifie que chaque engagement reconstruit **R'** reproduit tout ou partie de chaque engagement **R** qui lui a été transmis,

**Deuxième cas : le démonstrateur a transmis l'intégralité de chaque engagement R**

Dans le cas où le démonstrateur a transmis l'intégralité de chaque engagement **R,** le contrôleur, disposant des **m** valeurs publiques **G₁, G₂, ... Gₘ,** vérifie que chaque engagement **R** satisfait à une relation du type :

4

$$R \equiv G_1{}^{d1} . G_2{}^{d2} . \dots G_m{}^{dm} . D^v \bmod n$$

ou a une relation du type,

$$R \equiv D^v / G_1{}^{d1} . G_2{}^{d2} . \dots G_m{}^{dm} . \bmod n .$$

**Cas de la preuve de l'intégrité d'un message**

Dans une deuxième variante de réalisation susceptible d'être combinée avec la première, le procédé selon l'invention est destiné à prouver à une entité appelée contrôleur l'intégrité d'un message **M** associé à une entité appelée démonstrateur. Ladite entité démonstrateur comprend le témoin.

Lesdites entités démonstrateur et contrôleur exécutent les étapes suivantes:

**• étape 1 : acte d'engagement R**

A chaque appel, le témoin calcule chaque engagement **R** en appliquant le processus spécifié ci-dessus.

**• étape 2 : acte de défi d**

Le démonstrateur applique une fonction de hachage **h** ayant comme arguments le message **M** et tout ou partie de chaque engagement **R** pour calculer au moins un jeton **T.** Le démonstrateur transmet le jeton **T** au contrôleur. Le contrôleur, après avoir reçu un jeton **T,** produit des défis **d** en nombre égal au nombre d'engagements **R** et transmet les défis **d** au démonstrateur.

**• étape 3 : acte de réponse D**

Le témoin calcule des réponses **D** à partir des défis **d** en appliquant le processus spécifié ci-dessus.

**• étape 4 : acte de contrôle**

Le démonstrateur transmet chaque réponse **D** au contrôleur. Le contrôleur, disposant des m valeurs publiques **G$_1$, G$_2$, ... G$_m$,** calcule à partir de chaque défi **d** et de chaque réponse **D** un engagement reconstruit **R'** satisfaisant à une relation du type :

$$R' \equiv G_1{}^{d1} . G_2{}^{d2} . \dots G_m{}^{dm} . D^v \bmod n$$

ou à une relation du type :

$$R' \equiv D^v / G_1{}^{d1} . G_2{}^{d2} . \dots G_m{}^{dm} . \bmod n$$

Puis le contrôleur applique la fonction de hachage **h** ayant comme arguments le message **M** et tout ou partie de chaque engagement reconstruit **R'** pour reconstruire le jeton **T'.** Puis le contrôleur vérifie que le jeton **T'** est identique au jeton **T** transmis.

**Signature numérique d'un message et preuve de son authenticité**

Dans une troisième variante de réalisation susceptible d'être combinée aux deux précédentes, le procédé selon l'invention 1 est destiné à produire la signature numérique d'un message **M** par une entité appelée entité signataire. Ladite entité signataire comprend le témoin.

**Opération de signature**

Ladite entité signataire exécute une opération de signature en vue d'obtenir un message signé comprenant :

- le message **M**,
- les défis d et/ou les engagements **R**,
- les réponses **D**.

Ladite entité signataire exécute l'opération de signature en mettant en oeuvre les étapes suivantes :

• **étape 1 : acte d'engagement R**

A chaque appel, le témoin calcule chaque engagement **R** en appliquant le processus spécifié ci-dessus.

• **étape 2 : acte de défi d**

Le signataire applique une fonction de hachage **h** ayant comme arguments le message **M** et chaque engagement **R** pour obtenir un tram binaire. Le signataire extrait de ce train binaire des défis d en nombre égal au nombre d'engagements **R**.

• **étape 3 : acte de réponse D**

Le témoin calcule des réponses **D** à partir des défis **d** en appliquant le processus spécifié ci-dessus.

**Opération de contrôle**

Pour prouver l'authenticité du message **M,** une entité, appelée contrôleur, contrôle le message signé. Ladite entité contrôleur disposant du message signé exécute une opération de contrôle en procédant comme suit.

• **cas où le contrôleur dispose des engagements R, des défis d, des réponses D,**

Dans le cas où le contrôleur dispose des engagements **R,** des défis **d,** des réponses **D** le contrôleur vérifie que les engagements **R,** les défis **d** et les réponses **D** satisfont à des relations du type

$$R \equiv G_1^{\,d1} . G_2^{\,d2} . ... G_m^{\,dm} . D^v \bmod n$$

ou à des relations du type :

$$R \equiv D^v / G_1^{\,d1} . G_2^{\,d2} . ... G_m^{\,dm} . \bmod n$$

Puis le contrôleur vérifie que le message **M**, les défis **d** et les engagements **R** satisfont à la fonction de hachage

$$d = h\,(\text{message}, R)$$

• **cas où le contrôleur dispose des défis d et des réponses D**

Dans le cas où le contrôleur dispose des défis **d** et des réponses **D,** le contrôleur reconstruit, à partir de chaque défi **d** et de chaque réponse **D,** des engagements **R'** satisfaisant à des relations du type :

$$R' \equiv G_1^{\,d1} . G_2^{\,d2} . ... G_m^{\,dm} . D^v \bmod n$$

ou à des relations du type :

$$R' \equiv D^v / G_1^{\,d1} . G_2^{\,d2} . ... G_m^{\,dm} . \bmod n$$

Puis le contrôleur vérifie que le message **M** et les défis **d** satisfont à la fonction de hachage

$$d = h \text{ (message, R')}$$

**• cas où le contrôleur dispose des engagements R et des réponses D**

Dans le cas où le contrôleur dispose des engagements **R** et des réponses **D,** le contrôleur applique la fonction de hachage et reconstruit **d'**

$$d' = h \text{ (message, R)}$$

Puis, contrôleur vérifie que les engagements **R**, les défis **d'** et les réponses **D**, satisfont à des relations du type :

$$R \equiv G_1^{\ d'1} . G_2^{\ d'2} . \dots G_m^{\ d'm} . D^v \bmod n$$

ou à des relations du type :

$$R \equiv D^v / G_1^{\ d'1} . G_2^{\ d'2} . \dots G_m^{\ d'm} . \bmod n$$

**Système**

La présenté invention concerne également un système destiné à prouver à un serveur contrôleur,

- l'authenticité d'une entité et/ou
- l'intégrité d'un message **M** associé à cette entité.

Cette preuve est établie au moyen de tout ou partie des paramètres suivants ou dérivés de ceux-ci:

- **m** couples de valeurs privées $Q_1$, $Q_2$, ... $Q_m$ et publiques $G_1$, $G_2$, ... $G_m$ (**m** étant supérieur ou égal à 1),
- un module public **n** constitué par le produit de **f** facteurs premiers $p_1$, $p_2$, ... $p_f$ (f étant supérieur ou égal à 2),
- un exposant public **v** ;

Ledit module, ledit exposant et lesdites valeurs sont liés par des relations du type :

$$G_i . Q_i^v \equiv 1 . \bmod n \text{ ou } G_i \equiv Q_i^v \bmod n .$$

Ledit exposant **v** est tel que

$$v = 2^k$$

où **k** est un paramètre de sécurité plus grand que 1.
Ladite valeur publique $G_i$ est le carré $g_i^2$ d'un nombre de base $g_i$ inférieur aux **f** facteurs premiers $p_1$, $p_2$, ... $p_f$. Le nombre de base $g_i$ est tel que :

les deux équations :

$$x^2 \equiv g_i \bmod n \quad \text{et} \quad x^2 \equiv - g_i \bmod n$$

n'ont pas de solution en x dans l'anneau des entiers modulo **n**
et tel que :
l'équation :

$$x^v \equiv g_i^2 \bmod n$$

a des solutions en x dans l'anneau des entiers modulo **n** .

Ledit système comprend un dispositif témoin, notamment contenu dans un objet nomade se présentant par exemple sous la forme d'une carte bancaire à microprocesseur. Le dispositif témoin comporte une zone mémoire contenant les **f** facteurs premiers $p_i$, et/ou les paramètres des restes chinois des facteurs premiers et/ou le module public **n** et/ou les **m** valeurs privées $Q_i$ et/ou les **f.m** composantes $Q_{i, j}$ ($Q_{i, j} \equiv Q_i \bmod p_j$) des valeurs privées $Q_i$ et l'exposant public v . Ledit dispositif témoin comporte aussi :

- des moyens de production d'aléas, ci-après désignés les moyens de production d'aléas du dispositif témoin,
- des moyens de calcul, ci-après désignés les moyens de calcul des engagements **R** du dispositif témoin.

Les moyens de calcul permettent de calculer des engagements **R** dans l'anneau des entiers modulo **n** . Chaque engagement est calculé :

- soit en effectuant des opérations du type

$$R \equiv r^v \bmod n$$

où r est un aléa produit par les moyens de production d'aléas, **r** étant tel que **0 < r< n,**
- soit en effectuant des opérations du type

$$R_i \equiv r_i^{\,v} \bmod p_i$$

où $r_i$ est un aléa associé au nombre premier $p_i$ tel que **0 < $r_i$ < $p_i$**, chaque $r_i$ appartenant à une collection d'aléas $\{r_1, r_2 , ... r_f\}$ produits par les moyens de production d'aléas, puis en appliquant la méthode des restes chinois .

Ledit dispositif témoin comporte aussi :

- des moyens de réception, ci-après désignés les moyens de réception des défis **d** du dispositif témoin, pour recevoir un ou plusieurs défis **d** ; chaque défi **d** comportant **m** entiers $d_i$ ci-après appelés défis élémentaires ;
- des moyens de calcul, ci après désignés les moyens de calcul des réponses **D** du dispositif témoin, pour calculer à partir de chaque défi **d** une réponse **D,**

- soit en effectuant des opérations du type :

$$D \equiv r . Q_1^{\,d1} . Q_2^{\,d2} . ... Q_m^{\,dm} \bmod n$$

- soit en effectuant des opérations du type :

$$D_i \equiv r_i . Q_{i,1}^{\,d1} . Q_{i,2}^{\,d2} . ... Q_{i,m}^{\,dm} \bmod p_i,$$

puis en appliquant la méthode des restes chinois,

Ledit dispositif témoin comporte aussi des moyens de transmission pour transmettre un ou plusieurs engagements **R** et une ou plusieurs réponses **D.** Il y a autant de réponses **D** que de défis **d** que d'engagements **R.** Chaque groupe de nombres **R, d, D** constitue un triplet noté **{R, d, D}.**

**Cas de la preuve de l'authenticité d'une entité**

Dans une première variante de réalisation le système selon l'invention est destiné à prouver l'authenticité d'une entité appelée démonstrateur à une entité appelée contrôleur,

Ledit système est tel qu'il comporte un dispositif démonstrateur associé à l'entité démonstrateur. Ledit dispositif démonstrateur est interconnecté au dispositif témoin par des moyens d'interconnexion. Il peut se présenter notamment sous la forme de microcircuits logiques dans un objet nomade, par exemple sous la forme d'un microprocesseur dans une carte bancaire à microprocesseur.

Ledit système comporte aussi un dispositif contrôleur associé à l'entité contrôleur. Ledit dispositif contrôleur se présente notamment sous la forme d'un terminal ou d'un serveur distant. Ledit dispositif contrôleur comporte des moyens de connexion pour le connecter électriquement; électromagnétiquement, optiquement ou de manière acoustique, notamment via un réseau de communication informatique, au dispositif démonstrateur ;

Ledit système permet d'exécuter les étapes suivantes :

**• étape 1 : acte d'engagement R**

A chaque appel, les moyens de calcul des engagements **R** du dispositif témoin calculent chaque engagement **R** en appliquant le processus spécifié ci-dessus. Le dispositif témoin comporte des moyens de transmission, ci-après désignés les moyens de transmission du dispositif témoin, pour transmettre tout ou partie de chaque engagement **R** au dispositif démonstrateur, via les moyens d'interconnexion. Le dispositif démonstrateur comporte aussi des moyens de transmission, ci-après désignés les moyens de transmission du démonstrateur, pour transmettre tout ou partie de chaque engagement **R** au dispositif contrôleur, via les moyens de connexion.

**• étape 2 : acte de défi d**

Le dispositif contrôleur comporte des moyens de production de défis pour produire, après avoir reçu tout ou partie de chaque engagement **R,** des défis **d** en nombre égal au nombre d'engagements **R**. Le dispositif contrôleur comporte aussi des moyens de transmission, ci-après désignés les moyens de transmission du contrôleur, pour transmettre les défis **d** au démonstrateur, via les moyens de connexion.

**• étape 3 : acte de réponse D**

Les moyens de réception des défis **d** du dispositif témoin, reçoivent chaque défi **d** provenant du dispositif démonstrateur, via les moyens d'interconnexion. Les moyens de calcul des réponses **D** du dispositif témoin, calculent les réponses **D** à partir des défis **d** en appliquant le processus spécifié ci-dessus.

**• étape 4 : acte de contrôle**

Les moyens de transmission du démonstrateur transmettent chaque réponse **D** au contrôleur. Le dispositif contrôleur comporte aussi :

- des moyens de calcul, ci-après désignés les moyens de calcul du dispositif contrôleur,
- des moyens de comparaison, ci-après désignés les moyens de comparaison du dispositif contrôleur.

**Premier cas : le démonstrateur a transmis une partie de chaque engagement R**

Dans le cas où les moyens de transmission du démonstrateur ont transmis une partie de chaque engagement **R,** les moyens de calcul du dispositif contrôleur, disposant des **m** valeurs publiques $G_1$, $G_2$, ... $G_m$, calculent à partir de chaque défi **d** et de chaque réponse **D** un engagement reconstruit **R'** satisfaisant à une relation du type :

$$R' \equiv G_1^{\ d1} . G_2^{\ d2} . \ldots G_m^{\ dm} . D^v \bmod n$$

ou à une relation du type,

$$R' \equiv D^v / G_1^{\ d1} . G_2^{\ d2} . \ldots G_m^{\ dm} . \bmod n .$$

Les moyens de comparaison du dispositif contrôleur comparent chaque engagement reconstruit **R'** à tout ou partie de chaque engagement **R** reçu.

**Deuxième cas : le démonstrateur a transmis l'intégralité de chaque engagement R**

Dans le cas où les moyens de transmission du démonstrateur ont transmis l'intégralité de chaque engagement **R,** les moyens de calcul et les moyens de comparaison du dispositif contrôleur, disposant des **m** valeurs publiques $G_1$, $G_2$, ... $G_m$, vérifient que chaque engagement **R** satisfait à une relation du type :

$$R \equiv G_1^{\ d1} . G_2^{\ d2} . \ldots G_m^{\ dm} . D^v \bmod n$$

ou à une relation du type,

$$R \equiv D^v / G_1^{\ d1} . G_2^{\ d2} . \ldots G_m^{\ dm} . \bmod n .$$

**Cas de la preuve de l'intégrité d'un message.**

Dans une deuxième variante de réalisation susceptible d'être combinée avec la première, le système selon l'invention est destiné à prouver à une entité appelée contrôleur l'intégrité d'un message **M** associé à une entité appelée démonstrateur. Ledit système est tel qu'il comporte un dispositif démonstrateur associé à l'entité démonstrateur. Ledit dispositif démonstrateur est interconnecté au dispositif témoin par des moyens d'interconnexion. Ledit dispositif démonstrateur peut se présenter notamment sous la forme de microcircuits logiques dans un objet nomade par exemple sous la forme d'un microprocesseur dans une carte bancaire à microprocesseur. Ledit système comporte aussi dispositif contrôleur associé à l'entité contrôleur. Ledit dispositif contrôleur se présente notamment sous la forme d'un terminal ou d'un serveur distant. Ledit dispositif contrôleur comporte des moyens de connexion pour le connecter électriquement; électromagnétiquement, optiquement ou de manière acoustique, notamment via un réseau de communication informatique, au dispositif démonstrateur.
Ledit système exécute les étapes suivantes :

• **étape 1 : acte d'engagement R**

A chaque appel, les moyens de calcul des engagements **R** du dispositif témoin calculent chaque engagement **R** en appliquant le processus spécifié ci-dessus. Le dispositif témoin comporte des moyens de transmission, ci-après désignés les moyens de transmission du dispositif témoin, pour transmettre tout ou partie de chaque engagement **R** au dispositif démonstrateur, via les moyens d'interconnexion.

• **étape 2 : acte de défi d**

Le dispositif démonstrateur comporte des moyens de calcul, ci-après désignés les moyens de calcul du démonstrateur, appliquant une fonction de hachage **h** ayant comme arguments le message **M** et tout ou partie de chaque engagement **R,** pour calculer au moins un jeton **T.** Le dispositif démonstrateur comporte aussi des moyens de transmission, ci-après désignés les moyens de transmission du dispositif démonstrateur, pour transmettre chaque jeton **T,** via les moyens de connexion, au dispositif contrôleur. Le dispositif contrôleur comporte aussi des moyens de production de défis pour produire, après avoir reçu le jeton **T,** des défis **d** en nombre égal au nombre d'engagements **R.** Le dispositif contrôleur comporte aussi des moyens de transmission, ci-après désignés les moyens de transmission du contrôleur, pour transmettre les défis **d** au démonstrateur, via les moyens de connexion.

• **étape 3 : acte de réponse D**

Les moyens de réception des défis **d** du dispositif témoin, reçoivent chaque défi **d** provenant du dispositif démonstrateur, via les moyens d'interconnexion. Les moyens de calcul des réponses **D** du dispositif témoin, calculent les réponses **D** à partir des défis **d** en appliquant le processus spécifié ci-dessus.

• **étape 4 : acte de contrôle**

Les moyens de transmission du démonstrateur transmettent chaque réponse **D** au contrôleur. Le dispositif contrôleur comporte aussi des moyens de calcul, ci-après désignés les moyens de calcul du dispositif contrôleur, disposant des **m** valeurs publiques $G_1$, $G_2$, ... $G_m$, pour d'une part, calculer à partir de chaque défi **d** et de chaque réponse **D** un engagement reconstruit **R'** satisfaisant à une relation du type :

$$R' \equiv G_1{}^{d1} \cdot G_2{}^{d2} \cdot \ldots G_m{}^{dm} \cdot D^v \bmod n$$

ou à une relation du type :

$$R' \equiv D^v / G_1{}^{d1} \cdot G_2{}^{d2} \cdot \ldots G_m{}^{dm} \cdot \bmod n$$

puis d'autre part, calculer en appliquant la fonction de hachage **h** ayant comme arguments le message **M** et tout ou partie de chaque engagement reconstruit **R'**, un jeton **T'**.

Le dispositif contrôleur comporte aussi des moyens de comparaison, ci-après désignés les moyens de comparaison du dispositif contrôleur, pour comparer le jeton calculé **T'** au jeton **T** reçu.

**Signature numérique d'un message et preuve de son authenticité**

Dans une troisième variante de réalisation susceptible d'être combinée avec l'une et/ou l'autre des deux premières, le système selon l'invention est destiné à prouver la signature numérique d'un message **M,** ci-après désigné le message signé, par une entité appelée entité signataire.

Le message signé comprend :

- le message **M,**
- les défis **d** et/ou les engagements **R,**
- les réponses **D** ;

**Opération de signature**

Ledit système est tel qu'il comporte un dispositif signataire associé à l'entité signataire. Ledit dispositif signataire est interconnecté au dispositif témoin par des moyens d'interconnexion et peut se présenter notamment sous la forme de microcircuits logiques dans un objet nomade par exemple sous la forme d'un microprocesseur dans une carte bancaire à microprocesseur.

Ledit système permet d'exécuter les étapes suivantes :

• **étape 1 : acte d'engagement R**

A chaque appel, les moyens de calcul des engagements **R** du dispositif témoin calculent chaque engagement **R** en appliquant le processus spécifié ci-dessus.

Le dispositif témoin comporte des moyens de transmission, ci-après désignés les moyens de transmission du dispositif témoin, pour transmettre tout ou partie de chaque engagement **R** au dispositif signataire, via les moyens d'interconnexion.

• **étape 2 : acte de défi d**

Le dispositif signataire comporte des moyens de calcul, ci-après désignés les moyens de calcul du dispositif signataire, appliquant une fonction de hachage **h** ayant comme arguments le message **M** et tout ou partie de chaque engagement **R,** pour calculer un train binaire et extraire de ce train binaire des défis **d** en nombre égal au nombre d'engagements **R.**

• **étape 3 : acte de réponse D**

Les moyens de réception des défis **d** du dispositif témoin, reçoivent chaque défi **d** provenant du dispositif signataire, via les moyens d'interconnexion. Les moyens de calcul des réponses **D** du dispositif témoin, calculent les réponses **D** à partir des défis d en appliquant le processus spécifié ci-dessus.

Le dispositif témoin comporte des moyens de transmission, ci-après désignés les moyens de transmission du dispositif témoin, pour transmettre les réponses **D** au dispositif signataire, via les moyens d'interconnexion.

**Opération de contrôle**

Pour prouver l'authenticité du message **M**, une entité appelée contrôleur, contrôle le message signé.

Ledit système comporte un dispositif contrôleur associé à l'entité contrôleur. Ledit dispositif contrôleur se présente notamment sous la forme d'un terminal ou d'un serveur distant. Ledit dispositif contrôleur comporte des moyens de connexion pour le connecter électriquement, électromagnétiquement, optiquement ou de manière acoustique, notamment via un réseau de communication informatique, au dispositif signataire.

Le dispositif signataire associé à l'entité signataire comporte des moyens de transmission, ci-après désignés les moyens de transmission du dispositif signataire, pour transmettre au dispositif contrôleur, le message signé, via les moyens de connexion. Ainsi, le dispositif contrôleur dispose d'un message signé comprenant :

- le message **M,**
- les défis **d** et/ou les engagements **R,**
- les réponses **D** ;

Le dispositif contrôleur comporte :

- des moyens de calcul, ci-après désignés les moyens de calcul du dispositif contrôleur,
- des moyens de comparaison, ci-après désignés les moyens de comparaison du dispositif contrôleur.

**• cas où le dispositif contrôleur dispose des engagements R, des défis d, des réponses D,**

Dans le cas où le dispositif contrôleur dispose des engagements **R**, des défis **d**, des réponses **D,** les moyens de calcul et de comparaison du dispositif contrôleur vérifient que les engagements **R**, les défis **d** et les réponses **D** satisfont à des relations du type

$$R \equiv G_1^{\ d1} . G_2^{\ d2} . ... G_m^{\ dm} . D^v \bmod n$$

ou à des relations du type :

$$R \equiv D^v / G_1^{\ d1} . G_2^{\ d2} . ... G_m^{\ dm} . \bmod n$$

Puis, les moyens de calcul et de comparaison du dispositif contrôleur vérifient que le message **M**, les défis **d** et les engagements **R** satisfont à la fonction de hachage

$$d = h \ (message, R)$$

**• cas où le dispositif contrôleur dispose des défis d et des réponses D**

Dans le cas où le dispositif contrôleur dispose des défis **d** et des réponses **D,** les moyens de calcul du dispositif contrôleur calculent, à partir de chaque défi **d** et de chaque réponse **D**, des engagements **R'** satisfaisant à des relations du type :

$$R' \equiv G_1^{\ d1} . G_2^{\ d2} . ... G_m^{\ dm} . D^v \bmod n$$

ou à des relations du type :

$$R' \equiv D^v / G_1^{\ d1} . G_2^{\ d2} . ... G_m^{\ dm} . \bmod n$$

Puis, les moyens de calcul et de comparaison du dispositif contrôleur vérifient que le message M et les défis d satisfont à la fonction de hachage

$$d = h \ (message, R')$$

**• cas où le dispositif contrôleur dispose des engagements R et des réponses** D

Dans le cas où le dispositif contrôleur dispose des engagements R et des réponses D, les moyens de calcul du dispositif contrôleur appliquent la fonction de hachage et calculent d' tel que

$$\textbf{d' = h (message, R)}$$

Puis, les moyens de calcul et de comparaison du dispositif contrôleur vérifient que les engagements **R**, les défis **d' et** les réponses **D,** satisfont à des relations du type :

$$\textbf{R} \equiv \textbf{G}_1^{\ \textbf{d'1}} \cdot \textbf{G}_2^{\ \textbf{d'2}} \cdot \ldots \textbf{G}_m^{\ \textbf{d'm}} \cdot \textbf{D}^{\textbf{v}} \textbf{ mod n}$$

ou à des relations du type :

$$\textbf{R} \equiv \textbf{D}^{\textbf{v}} / \textbf{G}_1^{\ \textbf{d'1}} \cdot \textbf{G}_2^{\ \textbf{d'2}} \cdot \ldots \textbf{G}_m^{\ \textbf{d'm}} \cdot \textbf{ mod n}$$

**Dispositif Terminal**

L'invention concerne aussi un dispositif terminal associé à une entité. Le dispositif terminal se présente notamment sous la forme d'un objet nomade par exemple sous la forme d'une carte bancaire à microprocesseur. Le dispositif terminal est destiné à prouver à un dispositif contrôleur :

- l'authenticité de l'entité et/ou
- l'intégrité d'un message **M** associé à cette entité.

Cette preuve est établie au moyen de tout ou partie des paramètres suivants ou dérivés de ceux-ci:

- **m** couples de valeurs privées **Q₁, Q₂, ... Qₘ** et publiques **G₁, G₂, ... Gₘ** (**m** étant supérieur ou égal à 1),
- un module public **n** constitué par le produit de **f** facteurs premiers **p₁, p₂, ... pf** (**f** étant supérieur ou égal à 2),
- un exposant public **v** .

Ledit module, ledit exposant et lesdites valeurs sont liés par des relations du type :

$$\textbf{G}_i \cdot \textbf{Q}_i^{\textbf{v}} \equiv \textbf{1} \cdot \textbf{mod n ou } \textbf{G}_i \equiv \textbf{Q}_i^{\textbf{v}} \textbf{mod n} \cdot$$

Ledit exposant **v** est tel que

$$\textbf{v = 2}^{\textbf{k}}$$

où **k** est un paramètre de sécurité plus grand que 1.

Ladite valeur publique **Gᵢ** est le carré **gᵢ²** d'un nombre de base **gᵢ** inférieur aux **f** facteurs premiers **p₁, p₂, ... pf.** Le nombre de base **gᵢ** est tel que :

les deux équations :

$$\textbf{x}^2 \equiv \textbf{g}_i \textbf{ mod n} \quad \text{et} \quad \textbf{x}^2 \equiv - \textbf{g}_i \textbf{ mod n}$$

n'ont pas de solution en x dans l'anneau des entiers modulo **n**
et tel que :
l'équation :

$$x^v \equiv g_i^2 \bmod n$$

a des solutions en x dans l'anneau des entiers modulo **n** .

Ledit dispositif terminal comprend un dispositif témoin comportant une zone mémoire contenant les **f** facteurs premiers $p_i$ et/ou les paramètres des restes chinois des facteurs premiers et/ou le module public **n** et/ou les **m** valeurs privées $Q_i$ et/ou les **f.m** composantes $Q_{i,\,j}$ ($Q_{i,\,j} \equiv Q_i \bmod p_j$) des valeurs privées $Q_i$ et l'exposant public v .

Ledit dispositif témoin comporte aussi :

- des moyens de production d'aléas, ci-après désignés les moyens de production d'aléas du dispositif témoin,
- des moyens de calcul, ci-après désignés les moyens de calcul des engagements **R** du dispositif témoin, pour calculer des engagements **R** dans l'anneau des entiers modulo **n**.

Chaque engagement est calculé :

- soit en effectuant des opérations du type

$$R \equiv r^v \bmod n$$

ou **r** est un aléa produit par les moyens de production d'aléas, **r** étant tel que **0 < r< n,**

- soit en effectuant des opérations du type

$$R_i \equiv r_i^v \bmod p_i$$

ou $r_i$ est un aléa associé au nombre premier $p_i$ tel que **0 < $r_i$ < $p_i$**, chaque $r_i$ appartenant à une collection d'aléas $\{r_1, r_2, \dots r_f\}$ produits par les moyens de production d'aléas, puis en appliquant la méthode des restes chinois.

Le dispositif témoin comporte aussi :

- des moyens de réception, ci-après désignés les moyens de réception des défis **d** du dispositif témoin, pour recevoir un ou plusieurs défis **d** ; chaque défi **d** comportant **m** entiers $d_i$ ci-après appelés défis élémentaires ;
- des moyens de calcul, ci après désignés les moyens de calcul des réponses **D** du dispositif témoin, pour calculer à partir de chaque défi **d** une réponse **D,**

  - soit en effectuant des opérations du type :

$$D \equiv r \cdot Q_1^{\,d1} \cdot Q_2^{\,d2} \cdot \ldots Q_m^{\,dm} \bmod n$$

  - soit en effectuant des opérations du type :

$$D_i \equiv r_i \cdot Q_{i,1}^{\,d1} \cdot Q_{i,2}^{\,d2} \cdot \ldots Q_{i,m}^{\,dm} \bmod p_i$$

puis en appliquant la méthode des restes chinois.

Ledit dispositif témoin comporte aussi des moyens de transmission pour transmettre un ou plusieurs engagements **R** et une ou plusieurs réponses **D**. Il y a autant de réponses **D** que de défis **d** que d'engagements **R**. Chaque groupe de nombres **R, d, D** constituant un triplet noté {**R, d, D}.**

**Cas de la preuve de l'authenticité d'une entité**

Dans une première variante de réalisation le dispositif terminal selon l'invention est destiné à prouver l'authenticité d'une entité appelée démonstrateur à une entité appelée contrôleur.

Ledit dispositif terminal est tel qu'il comporte un dispositif démonstrateur associé à l'entité démonstrateur. Ledit dispositif démonstrateur est interconnecté au dispositif témoin par des moyens d'interconnexion. Il peut se présenter notamment sous la forme de microcircuits logiques dans un objet nomade par exemple sous la forme d'un microprocesseur dans une carte bancaire à microprocesseur.

Ledit dispositif démonstrateur comporte aussi des moyens de connexion pour le connecter électriquement, électromagnétiquement, optiquement ou de manière acoustique, notamment via un réseau de communication informatique, au dispositif contrôleur associé à l'entité contrôleur. Ledit dispositif contrôleur se présente notamment sous la forme d'un terminal ou d'un serveur distant.

Ledit dispositif terminal permet d'exécuter les étapes suivantes :

• **étape 1 : acte d'engagement R**

A chaque appel, les moyens de calcul des engagements **R** du dispositif témoin calculent chaque engagement **R** en appliquant le processus spécifié ci-dessus.

Le dispositif témoin comporte des moyens de transmission, ci-après désignés les moyens de transmission du dispositif témoin, pour transmettre tout ou partie de chaque engagement **R** au dispositif démonstrateur, via les moyens d'interconnexion. Le dispositif démonstrateur comporte aussi des moyens de transmission, ci-après désignés les moyens de transmission du démonstrateur, pour transmettre tout ou partie de chaque engagement **R** au dispositif contrôleur, via les moyens de connexion.

• **étapes 2 et 3 : acte de défi d, acte de réponse D**

Les moyens de réception des défis **d** du dispositif témoin, reçoivent chaque défi **d** provenant du dispositif contrôleur via les moyens de connexion entre le dispositif contrôleur et le dispositif démonstrateur et via les moyens d'interconnexion entre le dispositif démonstrateur et le dispositif témoin. Les moyens de calcul des réponses **D** du dispositif témoin, calculent les réponses **D** à partir des défis **d** en appliquant le processus spécifié ci-dessus.

• **étape 4 : acte de contrôle**

Les moyens de transmission du démonstrateur transmettent chaque réponse **D** au dispositif contrôleur qui procède au contrôle.

**Cas de la preuve de l'intégrité d'un message**

Dans une deuxième variante de réalisation susceptible d'être combinée à la première, le dispositif terminal selon l'invention est destiné à prouver à une entité appelée contrôleur l'intégrité d'un message **M** associé à une entité appelée démonstrateur. Ledit dispositif terminal est tel qu'il comporte un dispositif démonstrateur associé à l'entité démonstrateur, ledit dispositif démonstrateur est interconnecté au dispositif témoin par des moyens d'interconnexion. Il peut se présenter notamment sous la forme de microcircuits logiques dans un objet nomade par exemple sous la forme d'un microprocesseur dans une carte bancaire à microprocesseur. Ledit dispositif démonstrateur comporte des moyens de connexion pour le connecter électriquement, électromagnétiquement, optiquement ou de manière acoustique, notamment via un réseau de communication informatique, au dispositif contrôleur associé à l'entité contrôleur. Ledit dispositif contrôleur se présente notamment sous la forme d'un terminal ou d'un serveur distant.

Ledit dispositif terminal permet d'exécuter les étapes suivantes :

• **étape 1 : acte d'engagement R**

A chaque appel, les moyens de calcul des engagements **R** du dispositif témoin calculent chaque engagement **R** en appliquant le processus spécifié ci-dessus Le dispositif témoin comporte des moyens de transmission, ci-après désignés les moyens de transmission du dispositif témoin, pour transmettre tout ou partie de chaque engagement **R** au dispositif démonstrateur, via les moyens d'interconnexion.

• **étapes 2 et 3 : acte de défi d, acte de réponse D**

Le dispositif démonstrateur comporte des moyens de calcul, ci-après désignés les moyens de calcul du démonstrateur, appliquant une fonction de hachage **h** ayant comme arguments le message **M** et tout ou partie de chaque engagement **R,** pour calculer au moins un jeton **T**. Le dispositif démonstrateur comporte aussi des moyens de transmission, ci-après désignés les moyens de transmission du dispositif démonstrateur, pour transmettre chaque jeton **T,** via les moyens de connexion, au dispositif contrôleur.

Ledit dispositif contrôleur produit, après avoir reçu le jeton **T,** des défis **d** en nombre égal au nombre d'engagements **R.**

Les moyens de réception des défis **d** du dispositif témoin, reçoivent chaque défi **d** provenant du dispositif contrôleur via les moyens de connexion entre le dispositif contrôleur et le dispositif démonstrateur et via les moyens d'interconnexion entre le dispositif démonstrateur et le dispositif témoin. Les moyens de calcul des réponses **D** du dispositif témoin calculent les réponses **D** à partir des défis **d** en appliquant le processus spécifié ci-dessus.

**• étape 4 : acte de contrôle**

Les moyens de transmission du démonstrateur transmettent chaque réponse **D** au dispositif contrôleur qui procède au contrôle.

**Signature numérique d'un message et preuve de son authenticité**

Dans une troisième variante de réalisation susceptible d'être combinée avec l'une ou l'autre des deux premières, le dispositif terminal selon l'invention est destiné à produire la signature numérique d'un message **M,** ci-après désigné le message signé, par une entité appelée entité signataire. Le message signé comprend :

- le message **M,**
- les défis **d** et/ou les engagements **R,**
- les réponses **D.**

Ledit dispositif terminal est tel qu'il comporte un dispositif signataire associé à l'entité signataire. Ledit dispositif signataire est interconnecté au dispositif témoin par des moyens d'interconnexion. Il peut se présenter notamment sous la forme de microcircuits logiques dans un objet nomade par exemple sous la forme d'un microprocesseur dans une carte bancaire à microprocesseur. Ledit dispositif signataire comporte des moyens de connexion pour le connecter électriquement, électromagnétiquement, optiquement ou de manière acoustique, notamment via un réseau de communication informatique, au dispositif contrôleur associé à l'entité contrôleur. Ledit dispositif contrôleur se présente notamment sous la forme d'un terminal ou d'un serveur distant.

**Opération de signature**

Ledit dispositif terminal permet d'exécuter les étapes suivantes :

**• étape 1 : acte d'engagement R**

A chaque appel, les moyens de calcul des engagements **R** du dispositif témoin calculent chaque engagement **R** en appliquant le processus spécifié ci-dessus. Le dispositif témoin comporte des moyens de transmission, ci-après désignés les moyens de transmission du dispositif témoin, pour transmettre tout ou partie de chaque engagement **R** au dispositif signataire, via les moyens d'interconnexion.

**• étape 2 : acte de défi d**

Le dispositif signataire comporte des moyens de calcul, ci-après désignés les moyens de calcul du dispositif signataire, appliquant une fonction de hachage h ayant comme arguments le message **M** et tout ou partie de chaque engagement **R,** pour calculer un tram binaire et extraire de ce train binaire des défis d en nombre égal au nombre d'engagements **R.**

**• étape 3 : acte de réponse D**

Les moyens de réception des défis **d** du dispositif témoin reçoivent chaque défi **d** provenant du dispositif signataire, via les moyens d'interconnexion. Les moyens de calcul des réponses **D** du dispositif témoin, calculent les réponses **D** à partir des défis **d** en appliquant le processus spécifié ci-dessus. Le dispositif témoin comporte des moyens de transmission, ci-après désignés les moyens de transmission du dispositif témoin pour transmettre les réponses **D** au dispositif signataire, via les moyens d'interconnexion.

**Dispositif contrôleur**

L'invention concerne aussi un dispositif contrôleur. Le dispositif contrôleur peut se présenter notamment sous la forme d'un terminal ou d'un serveur distant associé à une entité contrôleur. Le dispositif contrôleur est destiné à contrôler :

- l'authenticité d'une entité et/ou
- l'intégrité d'un message **M** associé à cette entité,

Cette preuve est établie au moyen de tout ou partie des paramètres suivants ou dérivés de ceux-ci:

- **m** couples de valeurs publiques $G_1$, $G_2$, ... $G_m$ (m étant supérieur ou égal à 1),
- un module public **n** constitué par le produit de f facteurs premiers $p_1$, $p_2$, ... $p_f$ (**f** étant supérieur ou égal à 2) inconnus du dispositif contrôleur et de l'entité contrôleur associé,
- un exposant public **v**.

Ledit module, ledit exposant et lesdites valeurs sont liés par des relations du type :

$$G_i \cdot Q_i^v \equiv 1 \cdot \bmod n \text{ ou } G_i \equiv Q_i^v \bmod n \text{ ;}$$

où $Q_i$ désigne une valeur privée, inconnue du dispositif contrôleur, associée à la valeur publique $G_i$.
L'exposant **v** est tel que

$$v = 2^k$$

où **k** est un paramètre de sécurité plus grand que 1.
Ladite valeur publique $G_i$ est le carré $g_i^2$ d'un nombre de base $g_i$ inférieur aux **f** facteurs premiers $p_1$, $p_2$, ... $p_f$. Le nombre de base $g_i$ est tel que :

les deux équations :

$$x^2 \equiv g_i \bmod n \quad \text{et} \quad x^2 \equiv -g_i \bmod n$$

n'ont pas de solution en x dans l'anneau des entiers modulo **n**
et tel que :
l'équation :

$$x^v \equiv g_i^2 \bmod n$$

a des solutions en x dans l'anneau des entiers modulo n .

**Cas de la preuve de l'authenticité d'une entité**

Dans une première variante de réalisation le dispositif contrôleur selon l'invention est destiné à prouver l'authenticité d'une entité appelée démonstrateur à une entité appelée contrôleur.
Ledit dispositif contrôleur comporte des moyens de connexion pour le connecter électriquement, électromagnétiquement, optiquement ou de manière acoustique, notamment via un réseau de communication informatique, à un dispositif démonstrateur associée à l'entité démonstrateur.
Ledit dispositif contrôleur permet d'exécuter les étapes suivantes :

• **étapes 1 et 2 : acte d'engagement R, acte de défi d**

Ledit dispositif contrôleur comporte aussi des moyens de réception de tout ou partie des engagements **R** provenant du dispositif démonstrateur, via les moyens de connexion.

Le dispositif contrôleur comporte des moyens de production de défis pour produire, après avoir reçu tout ou partie de chaque engagement **R,** des défis d en nombre égal au nombre d'engagements **R,** chaque défi **d** comportant **m** entiers **d$_i$** ci-après appelés défis élémentaires.

Le dispositif contrôleur comporte aussi des moyens de transmission, ci-après désignés les moyens de transmission du contrôleur, pour transmettre les défis **d** au démonstrateur, via les moyens de connexion.

**• étapes 3 et 4 : acte de réponse D, acte de contrôle**

Ledit dispositif contrôleur comporte aussi :

- des moyens de réception des réponses **D** provenant du dispositif démonstrateur, via les moyens de connexion
- des moyens de calcul, ci-après désignés les moyens de calcul du dispositif contrôleur,
- des moyens de comparaison, ci-après désignés les moyens de comparaison du dispositif contrôleur.

**Premier cas : le démonstrateur a transmis une partie de chaque engagement R**

Dans le cas où les moyens de réception du dispositif contrôleur ont reçus une partie de chaque engagement **R,** les moyens de calcul du dispositif contrôleur, disposant des **m** valeurs publiques **G$_1$, G$_2$, ... G$_m$**, calculent à partir de chaque défi **d** et de chaque réponse **D** un engagement reconstruit **R'** satisfaisant à une relation du type :

$$R' \equiv G_1{}^{d1} . G_2{}^{d2} . ... G_m{}^{dm} . D^v \bmod n$$

ou à une relation du type,

$$R' \equiv D^v / G_1{}^{d1} . G_2{}^{d2} . ... G_m{}^{dm} . \bmod n \, ,$$

Les moyens de comparaison du dispositif contrôleur comparent chaque engagement reconstruit **R'** à tout ou partie de chaque engagement **R** reçu.

**Deuxième cas : le démonstrateur a transmis l'intégralité de chaque engagement R**

Dans le cas où les moyens de réception du dispositif contrôleur ont reçus l'intégralité de chaque engagement **R,** les moyens de calcul et les moyens de comparaison du dispositif contrôleur, disposant des **m** valeurs publiques **G$_1$, G$_2$, ... G$_m$**, vérifient que chaque engagement **R** satisfait à une relation du type :

$$R \equiv G_1{}^{d1} . G_2{}^{d2} . ... G_m{}^{dm} . D^v \bmod n$$

ou à une relation du type,

$$R \equiv D^v / G_1{}^{d1} . G_2{}^{d2} . ... G_m{}^{dm} . \bmod n \, .$$

**Cas de la preuve de l'intégrité d'un message**

Dans une deuxième variante de réalisation susceptible d'être combinée avec la première, le dispositif contrôleur selon l'invention est destiné à prouver l'intégrité d'un message **M** associé à une entité appelée démonstrateur.

Ledit dispositif contrôleur comporte des moyens de connexion pour le connecter électriquement, électromagnétiquement, optiquement ou de manière acoustique, notamment via un réseau de communication informatique, à un dispositif démonstrateur associée à l'entité démonstrateur.

Ledit dispositif contrôleur permet d'exécuter les étapes suivantes :

**• étapes 1 et 2 : acte d'engagement R, acte de défi d**

Ledit dispositif contrôleur comporte aussi des moyens de réception de jetons T provenant du dispositif démonstrateur, via les moyens de connexion. Le dispositif contrôleur comporte des moyens de production de défis pour produire, après avoir reçu le jeton **T,** des défis **d** en nombre égal au nombre d'engagements **R,** chaque défi **d** comportant **m** entiers **d$_i$** ci-après appelés défis élémentaires. Le dispositif contrôleur comporte aussi des moyens de transmission, ci-après désignés les moyens de transmission du contrôleur, pour transmettre les défis **d** au démonstrateur, via les moyens de connexion.

• **étapes 3 et 4 : acte de réponse D, acte de contrôle**

Ledit dispositif contrôleur comporte des moyens de réception des réponses **D** provenant du dispositif démonstrateur, via les moyens de connexion. Ledit dispositif contrôleur comporte aussi des moyens de calcul, ci-après désignés les moyens de calcul du dispositif contrôleur, disposant des **m** valeurs publiques **G$_1$, G$_2$, ... G$_m$,** pour d'une part, calculer à partir de chaque défi d et de chaque réponse **D** un engagement reconstruit **R'** satisfaisant à une relation du type :

$$R' \equiv G_1{}^{d1} . G_2{}^{d2} . ... G_m{}^{dm} . D^v \bmod n$$

ou à une relation du type :

$$R' \equiv D^v / G_1{}^{d1} . G_2{}^{d2} . ... G_m{}^{dm} . \bmod n$$

puis d'autre part, calculer en appliquant une fonction de hachage **h** ayant comme arguments le message **M** et tout ou partie de chaque engagement reconstruit **R',** un jeton **T**'.
Le dispositif contrôleur comporte aussi des moyens de comparaison, ci-après désignés les moyens de comparaison du dispositif contrôleur, pour comparer le jeton calculé **T'** au jeton **T** reçu.

**Signature numérique d'un message et preuve de son authenticité**

Dans une troisième variante de réalisation susceptible d'être combinée avec l'une et/ou l'autre des deux premières, le dispositif contrôleur selon l'invention est destiné à prouver l'authenticité du message **M** en contrôlant, par une entité appelée contrôleur, un message signé.
Le message signé, émis par un dispositif signataire associé à une entité signataire disposant d'une fonction de hachage **h (message, R),** comprend:

- le message **M,**
- des défis **d** et/ou des engagements **R,**
- des réponses **D** ;

**Opération de contrôle**

Ledit dispositif contrôleur comporte des moyens de connexion pour le connecter électriquement, électromagnétiquement, optiquement ou de manière acoustique, notamment via un réseau de communication informatique, à un dispositif signataire associée à l'entité signataire. Ledit dispositif contrôleur reçoit le message signé du dispositif signataire, via les moyens de connexion.
Le dispositif contrôleur comporte :

- des moyens de calcul, ci-après désignés les moyens de calcul du dispositif contrôleur,
- des moyens de comparaison, ci-après désignés les moyens de comparaison du dispositif contrôleur.

• **cas où le dispositif contrôleur dispose des engagements R, des défis d, des réponses D,**

Dans le cas où le dispositif contrôleur dispose des engagements **R,** des défis **d,** des réponses **D,** les moyens de calcul et de comparaison du dispositif contrôleur vérifient que les engagements **R,** les défis **d** et les réponses **D** satisfont à des relations du type

$$R \equiv G_1{}^{d1} . G_2{}^{d2} . ... G_m{}^{dm} . D^v \bmod n$$

ou à des relations du type :

$$R \equiv D^v / G_1{}^{d1} . G_2{}^{d2} . ... . G_m{}^{dm} . \bmod n$$

Puis, les moyens de calcul et de comparaison du dispositif contrôleur vérifient que le message **M,** les défis **d** et les engagements **R** satisfont à la fonction de hachage :

$$d = h \text{ (message, R)}$$

• **cas où le dispositif contrôleur dispose des défis d et des réponses D**

Dans le cas où le dispositif contrôleur dispose des défis **d** et des réponses **D**, les moyens de calcul du dispositif contrôleur calculent, à partir de chaque défi **d** et de chaque réponse **D**, des engagements **R'** satisfaisant à des relations du type :

$$R' \equiv G_1{}^{d1} . G_2{}^{d2} . ... . G_m{}^{dm} . D^v \bmod n$$

ou à des relations du type :

$$R' \equiv D^v / G_1{}^{d1} . G_2{}^{d2} . ... . G_m{}^{dm} . \bmod n$$

puis, les moyens de calcul et de comparaison du dispositif contrôleur vérifient que le message **M** et les défis **d** satisfont à la fonction de hachage

$$d = h \text{ (message, R')}$$

• **cas où le dispositif contrôleur dispose des engagements R et des réponses D**

Dans le cas où le dispositif contrôleur dispose des engagements **R** et des réponses **D,** les moyens de calcul du dispositif contrôleur appliquent la fonction de hachage et calculent **d'** tel que

$$d' = h \text{ (message, R)}$$

Puis, les moyens de calcul et de comparaison du dispositif contrôleur vérifient que les engagements **R,** les défis **d'** et les réponses **D,** satisfont à des relations du type :

$$R \equiv G_1{}^{d'1} . G_2{}^{d'2} . ... . G_m{}^{d'm} . D^v \bmod n$$

ou à des relations du type :

$$R \equiv D^v / G_1{}^{d'1} . G_2{}^{d'2} . ... . G_m{}^{d'm} . \bmod n$$

**Description**

Rappelons l'objectif de la technologie GQ : l'authentification dynamique d'entités et de messages associés, ainsi que la signature numérique de messages.

La version classique de la technologie GQ fait appel à la technologie RSA. Mais, si la technologie RSA dépend bel et bien de la factorisation, cette dépendance n'est pas une équivalence, loin s'en faut, comme le démontrent les attaques dites « multiplicatives » contre diverses normes de signature numérique mettant en oeuvre la technologie RSA.

Dans le cadre de la technologie GQ2, la présente partie de l'invention porte plus précisément sur l'utilisation des jeux de clés GQ2 dans le cadre de l'authentification dynamique et de la signature numérique. La technologie GQ2 ne fait pas appel à la technologie RSA. L'objectif est double : d'une part, améliorer les performances par rapport à la technologie RSA ; d'autre part, éviter les problèmes inhérents à la technologie RSA. La clé privée GQ2 est la factorisation du module $n$. Toute attaque au niveau de striplets GQ2 se ramène à la factorisation du module $n$ : il y a cette fois équivalence. Avec la technologie GQ2, la charge de travail est réduite, tant pour l'entité qui signe ou qui s'authentifie que pour celle qui contrôle. Grâce à un meilleur usage du problème de la factorisation, tant en sécurité qu'en performance, la technologie GQ2 concurrence la technologie RSA.

La technologie GQ2 utilise un ou plusieurs petits nombres entiers plus grands que 1, disons $m$ petits nombres entiers ($m \geq 1$) appelés « nombres de base » et notés par $g_i$. Les nombres de base étant fixés de $g_1$ à $g_m$ avec $m \geq 1$, une clé publique de vérification $\langle v, n \rangle$ est choisie de la manière suivante. L'exposant public de vérification $v$ est $2^k$ où $k$ est un petit nombre entier plus grand que 1 ($k \geq 2$). Le module public $n$ est le produit d'au moins deux facteurs premiers plus grands que les nombres de base, disons $f$ facteurs premiers ($f \geq 2$) notés par $p_j$, de $p_1 \dots p_f$. Les $f$ facteurs premiers sont choisis de façon à ce que le module public $n$ ait les propriétés suivantes par rapport à chacun des $m$ nombres de base de $g_1$ à $g_m$.

- D'une part, les équations (1) et (2) n'ont pas de solution en $x$ dans l'anneau des entiers modulo $n$, c'est-à-dire que $g_i$ et $-g_i$ sont deux résidus non quadratiques (mod $n$).

$$x^2 \equiv g_i \pmod{n} \qquad (1)$$

$$x^2 \equiv -g_i \pmod{n} \qquad (2)$$

- D'autre part, l'équation (3) a des solutions en $x$ dans l'anneau des entiers modulo $n$.

$$x^{2^k} \equiv g_i^2 \pmod{n} \qquad (3)$$

La clé publique de vérification $\langle v, n \rangle$ étant fixée selon les nombres de base de $g_1$ à $g_m$ avec $m \geq 1$, chaque nombre de base $g_i$ détermine un couple de valeurs GQ2 comprenant une valeur publique $G_i$ et une valeur privée $Q_i$ : soit $m$ couples notés de $G_1 Q_1$ à $G_m Q_m$. La valeur publique $G_i$ est le carré du nombre de base $g_i$ : soit $G_i = g_i^2$. La valeur privée $Q_i$ est une des solutions à l'équation (3) ou bien l'inverse (mod $n$) d'une telle solution.

De même que le module $n$ se décompose en $f$ facteurs premiers, l'anneau des entiers modulo $n$ se décompose en $f$ corps de Galois, de $CG(p_1)$ à $CG(p_f)$. Voici les projections des équations (1), (2) et (3) dans $CG(p_j)$.

$$x^2 \equiv g_i \pmod{p_j} \qquad (1.a)$$

$$x^2 \equiv -g_i \pmod{p_j} \qquad (2.a)$$

$$x^{2^k} \equiv g_i^2 \pmod{p_j} \qquad (3.a)$$

Chaque valeur privée $Q_i$ peut se représenter de manière unique par $f$ composantes privées, une par facteur premier : $Q_{ij} \equiv Q_i \pmod{p_j}$. Chaque composante privée $Q_{ij}$ est une solution à l'équation (3.a) ou bien l'inverse (mod $p_j$) d'une telle solution. Après que toutes les solutions possibles à chaque équation (3.a) aient été calculées, la technique des restes chinois permet d'établir toutes les valeurs possibles pour chaque valeur privée $Q_i$ à partir de $f$ composantes de $Q_{i,1}$ à $Q_{i,f}$ : $Q_i$ = Restes Chinois ($Q_{i,1}, Q_{i,2}, \dots Q_{i,f}$) de manière à obtenir toutes les solutions possibles à l'équation (3).

Voici la technique des restes chinois : soient deux nombres entiers positifs premiers entre eux $a$ et $b$ tels que $0 < a < b$, et deux composantes $X_a$ de 0 à $a$-1 et $X_b$ de 0 à $b$-1 ; il s'agit de déterminer $X$= Restes Chinois ($X_a, X_b$), c'est-à-dire, le nombre unique $X$ de 0 à $a.b$-1 tel que $X_a \equiv X \pmod{a}$ et $X_b \equiv X \pmod{b}$. Voici le paramètre des restes chinois : $\alpha \equiv \{b \pmod{a}\}^{-1} \pmod{a}$. Voici l'opération des restes chinois : $\varepsilon \equiv X_b \pmod{a}$ ; $\delta = X_a - \varepsilon$ ; si $\delta$ est négatif, remplacer $\delta$ par $\delta + \alpha$ ; $\gamma \equiv \alpha . \delta \pmod{a}$ ; $X = \gamma . b + X_b$. Lorsque les facteurs premiers sont rangés dans l'ordre croissant, du plus petit $p_1$ au plus grand $p_f$, les paramètres des restes chinois peuvent être les suivants (il y en a $f$-1, c'est-à-dire, un de moins que de facteurs premiers). Le premier paramètre des restes chinois est $\alpha \equiv \{p_2 \pmod{p_1}\}^{-1} \pmod{p_1}$. Le second paramètre des restes chinois est $\beta \equiv \{p_1.p_2 \pmod{p_3}\}^{-1} \pmod{p_3}$. Le $i$ ième paramètre des restes chinois est $\lambda \equiv \{p_1.p_2. \dots p_{i-1} \pmod{}$

$p_i)\}^{-1}$ (mod $p_i$). Et ainsi de suite. Ensuite, en $f$-1 opérations des restes chinois, on établit un premier résultat (mod $p_2$ fois $p_1$) avec le premier paramètre, puis, un second résultat (mod $p_1 \cdot p_2$ fois $p_3$) avec le second paramètre, et ainsi de suite, jusqu'à un résultat (mod $p_1$. ... $p_{f-1}$ fois $p_f$), c'est-à-dire, (mod $n$).

Il y a plusieurs représentations possibles de la clé privée GQ2, ce qui traduit **le polymorphisme de la clé privée GQ2.** Les diverses représentations s'avèrent équivalentes : elles se ramènent toutes à la connaissance de la factorisation du module $n$ qui est la véritable clé privée GQ2. Si la représentation affecte bien le comportement de l'entité qui signe ou qui s'authentifie, elle n'affecte pas le comportement de l'entité qui contrôle.

Voici les trois principales représentations possibles de la clé privée GQ2. 1) La représentation classique en technologie GQ consiste à stocker $m$ valeurs privées $Q_i$ et la clé publique de vérification $\langle v, n \rangle$ ; en technologie GQ2, cette représentation est concurrencée par les deux suivantes. 2) La représentation optimale en termes de charges de travail consiste à stocker l'exposant public $v$, les $f$ facteurs premiers $p_j$, $m.f$ composantes privées $Q_{ij}$ et $f$-1 paramètres des restes chinois. 3) La représentation optimale en termes de taille de clé privée consiste à stocker l'exposant public $v$, les $m$ nombres de base $g_1$ et les $f$ facteurs premiers $p_{pj}$, puis, à commencer chaque utilisation en établissant ou bien $m$ valeurs privées $Q_i$ et le module $n$ pour se ramener à la première représentation, ou bien $m.f$ composantes privées $Q_{ij}$ et $f$-1 paramètres des restes chinois pour se ramener à la seconde.

Les entités qui signent ou s'authentifient peuvent toutes utiliser les mêmes nombres de base ; sauf contre indication, les $m$ nombres de base de $g_1$ à $g_m$ peuvent alors avantageusement être les $m$ premiers nombres premiers.

Parce que la sécurité du mécanisme d'authentification dynamique ou de signature numérique équivaut à la connaissance d'une décomposition du module, la technologie GQ2 ne permet pas de distinguer simplement deux entités utilisant le même module. Généralement, chaque entité qui s'authentifie ou signe dispose de son propre module GQ2. Toutefois, on peut spécifier des modules GQ2 à quatre facteurs premiers dont deux sont connus d'une entité et les deux autres d'une autre.

Voici un premier jeu de clés GQ2 avec **$k$ = 6,** soit $v$ = 64, **$m$ = 3,** soit trois nombres de base : **$g_1$** = 3, **$g_2$** = 5 et **$g_3$** = 7, et **$f$ = 3,** soit un module à trois facteurs premiers : deux congrus à 3 (mod 4) et un à 5 (mod 8). Notons que $g$ = 2 est incompatible avec un facteur premier congru à 5 (mod 8).

$p_1$ = 03CD2F4F21E0EAD60266D5CFCEBB6954683493E2E833
$p_2$ = 0583B097E8D8D777BAB3874F2E76659BB614F985EC1B
$p_3$ = 0C363CD93D6B3FEC78EE13D7BE9D84354B8FDD6DA1FD
$n = p_1 . p_2 . p_3$ = FFFF81CEA149DCF2F72EB449C5724742FE2A3630D902CC00EAFEE1B957F3BDC49BE9CBD4 D94467B72AF28CFBB26144CDF4BBDBA3C97578E29CC9BBEE8FB6DDDD
$Q_{1.1}$ = 0279C60D216696CD6F7526E23512DAE090CFF879FDDE
$Q_{2.1}$ = 7C977FC38F8413A284E9CE4EDEF4AEF35BF7793B89
$Q_{3.1}$ = 6FB3B9C05A03D7CADA9A3425571EF5ECC54D7A7B6F
$Q_{1.2}$ = 0388EC6AA1E87613D832E2B80E5AE8C1DF2E74BFF502
$Q_{2.2}$ = 04792CE70284D16E9A158C688A7B3FEAF9C40056469E
$Q_{3.2}$ = FDC4A8E53E185A4BA793E93BEE5C636DA731BDCA4E
$Q_{1.3}$ = 07BC1AB048A2EAFDAB59BD40CCF2F657AD8A6B573BDE
$Q_{2.3}$ = 0AE8551E116A3AC089566DFDB3AE003CF174FC4E4877
$Q_{3.3}$ = 01682D490041913A4EA5B80D16B685E4A6DD88070501
$Q_1$ = D7E1CAF28192CED6549FF457708D50A7481572DD5F2C335D8C69E22521B510B64454FB7A19AEC8 D06985558E764C6991B05FC2AC74D9743435AB4D7CFOFF6557
$Q_2$ = CB1ED6B1DD649B89B9638DC33876C98AC7AF689E9D1359E4DB17563B9B3DC582D5271949F3DBA5 A70C108F561A274405A5CB882288273ADE67353A5BC316C093
$Q_3$ = 09AA6F4930E51A70CCDFA77442B10770DD1CD77490E3398AAD9DC50249C34312915E55917A1ED4D83 AA3D607E3EB5C8B197697238537FE7A0195C5E8373EB74D

Voici un second jeu de clés GQ2, avec **$k$ = 9,** soit $v$ = 512, **$m$ = 2,** soit deux nombres de base : $g_1$ = 2 et $g_2$ = 3, et **$f$ = 3,** soit un module à trois facteurs-premiers congrus à 3 (mod 4).

$p_1$ = 03852103E40CD4F06FA7BAA9CC8D5BCE96E3984570CB
$p_2$ = 062AC9EC42AA3E688DC2BC871C8315CB939089B61DD7
$p_3$ = 0BCADEC219F1DFBB8AB5FE808A0FFCB53458284ED8E3
$n = p_1 . p_2 . p_3$ = FFFF5401ECD9E537F167A80C0A9111986F7A8EBA4D6698AD68FF670DE5D9D77DFF00716 DC7539F7CBBCF969E73A0C49761B276A8E6B6977A21D51669D03 9F1D7
$Q_{1.1}$ = 0260BC7243C22450D566B5C6EF74AA29F2B927AF68E1
$Q_{2.1}$ = 0326C12FC7991ECDC9BB8D7C1C4501BE1BAE9485300E
$Q_{1.2}$ = 02D0B4CC95A2DD435D0E22BFBB29C59418306F6CD00A
$Q_{2.2}$ = 045ECB881387582E7C556887784D2671CA118E22FCF2
$Q_{1.3}$ = B0C2B1F8Q8D24F6376E3A534EB555EF54E6AEF5982
$Q_{2.3}$ = 0AB9F81DF462F58A52D937E6D81F48FFA4A87A9935AB

$Q_1$ = 27F7B9FC82C19ACAE47F3FE9560C3536A7E90F8C3C51E13C35F32FD8C6823DF753685DD63555D2146 FCDB9B28DA367327DD6EDDA092D0CF108DOAB708405DA46

$Q_2$ = 230D0B9595E5AD388F1F447A69918905EBFB05910582E5BA649C94B0B2661E49DF3C9B42FEF1F37A7909 B1C2DD54113ACF87C6 F11F19874DE7DCSD1DF2A9252D

## Authentification dynamique

Le mécanisme d'authentification dynamique est destiné à prouver à une entité appelée **contrôleur** l'authenticité d'une autre entité appelée **démonstrateur** ainsi que l'authenticité d'un éventuel message associé *M*, de sorte que le contrôleur s'assure qu'il s'agit bien du démonstrateur et éventuellement que lui et le démonstrateur parlent bien du même message *M*. Le message associé *M* est optionnel, ce qui signifie qu'il peut être vide. Le mécanisme d'authentification dynamique est une séquence de quatre actes : un acte d'engagement, un acte de défi, un acte de réponse et un acte de contrôle. Le démonstrateur joue les actes d'engagement et de réponse. Le contrôleur joue les actes de défi et de contrôle.

**Au sein du démonstrateur, on peut isoler un témoin,** de manière à isoler les paramètres et les fonctions les plus sensibles du démonstrateur, c'est-à-dire, la production des engagements et des réponses. Le témoin dispose du paramètre *k* et de la clé privée GQ2, c'est-à-dire, de la factorisation du module *n* selon l'une des trois représentations évoquées ci-dessus : • les *f* facteurs premiers et les *m* nombres de base, • les *m.f* composantes privées, les *f* facteurs premiers et *f*-1 paramètres des restes chinois, • les *m* valeurs privées et le module *n*.

Le témoin peut correspondre à une réalisation particulière, par exemple, • une carte à puce reliée à un PC formant ensemble le démonstrateur, ou encore, • des programmes particulièrement protégés au sein d'un PC, ou encore, • des programmes particulièrement protégés au sein d'une carte à puce. Le témoin ainsi isolé est semblable au témoin défini ci-après au sein du signataire. A chaque exécution du mécanisme, le témoin produit un ou plusieurs engagements *R*, puis, autant de réponses *D* à autant de défis *d*. Chaque ensemble {*R, d, D*} constitue un **triplet GQ2.**

Outre qu'il comprend le témoin, le démonstrateur dispose également, le cas échéant, d'une fonction de hachage et d'un message *M.*

Le contrôleur dispose du module *n* et des paramètres *k* et *m* ; le cas échéant, il dispose également de la même fonction de hachage et d'un message *M'*. Le contrôleur est apte à reconstituer un engagement *R* ' à partir de n'importe quel défi *d* et de n'importe quelle réponse *D*. Les paramètres *k* et *m* renseignent le contrôleur. Faute d'indication contraire, les *m* nombres de base de $g_1$ à $g_m$ sont les *m* premiers nombres premiers. Chaque défi *d* doit comporter *m* défis élémentaires notés de $d_1$ à $d_m$ : un par nombre de base. Chaque défi élémentaire de $d_1$ à $d_m$ doit prendre une valeur de 0 à $2^{k-1}$-1 (les valeurs de *v*/2 à *v*-1 ne sont pas utilisées). Typiquement, chaque défi est codé par *m* fois *k*-1 bits (et non pas *m* fois *k* bits). Par exemple, avec *k* = 6 et *m* = 3 et les nombres de base 3, 5 et 7, chaque défi comporte 15 bits transmis sur deux octets ; avec *k* = 9, *m* = 2 et les nombres de base 2 et 3, chaque défi comporte 16 bits transmis sur deux octets. Lorsque les (*k*-1).*m* défis possibles sont également probables, la valeur (*k*-1).*m* détermine la sécurité apportée par chaque triplet GQ2 : un imposteur qui, par définition, ne connaît pas la factorisation du module *n* a exactement une chance de succès sur $2^{(k+1).m}$. Lorsque (*k*-1).*m* vaut de 15 à 20, un triplet suffit à assurer raisonnablement l'authentification dynamique. Pour atteindre n'importe quel niveau de sécurité, on peut produire des triplets en parallèle ; on peut également en produire en séquence, c'est-à-dire, répéter l'exécution du mécanisme.

**1) L'acte d'engagement** comprend les opérations suivantes.
Lorsque le témoin dispose des *m* valeurs privées de $Q_1$ à $Q_m$ et du module *n*, il tire au hasard et en privé un ou plusieurs aléas *r* (0 < *r* < *n*) ; puis, par *k* élévations successives au carré (mod *n*), il transforme chaque aléa *r* en un engagement *R*.

$$R \equiv r^v \pmod{n}$$

Voici un exemple avec le premier jeu de clés avec *k* = 6.

*r* = B8AD426C1AC0165E94B894AC2437C1B1797EF562CFA53A4AF843131FF1C89CFDA131207194710EF9 C010E8F09C60D9815121981260919967C3E2FB4B4566088E

*R* = FFDD736B666F41FB771776D9D50DB7CDF03F3D976471B25C56D3AF07BE692CB1FE4EE70FA77032 BECD8411B813B4C21210C6B0449CC4292E5DD2BDB00828AF18

Lorsque le témoin dispose des *f* facteurs premiers de $p_1$ à $p_f$ et des *m.f* composantes privées $Q_{ij}$, il tire au hasard et en privé une ou plusieurs collections de *f* aléas : chaque collection comporte un aléa $r_i$ par facteur premier $p_i$ (0 < $r_i$ < $p_i$) ; puis, par *k* élévations successives au carré (mod $p_i$), il transforme chaque aléa $r_i$ en une composante d'engagement $R_i$.

$$R_i \equiv r_i^{\,v} \ (\mathrm{mod} \ p_i)$$

Voici un exemple avec le second jeu de clés avec $k = 9$.

$r_1$ = B0418EABEBADF0553A28903F74472CD49EE8C82D86

$R_1$ = 022B365F0BEA8E157E94A9DEB0512827FFD5149880F1

$r_2$ = 75A8DA8FE0E60BD55D28A218E31347732339F1D667

$R_2$ = 057E43A242C485FC20DEEF291C774CF1B30F0163DEC2

$r_3$ = 0D74D2BDA5302CF8BE2F6D406249D148C6960A7D27

$R_3$ = 06E14C8FC4DD312BA3B475F1F40CF01ACE2A88D5BB3C

Pour chaque collection de $f$ composantes d'engagement, le témoin établit un engagement selon la technique des restes chinois. Il y a autant d'engagements que de collections d'aléas.

$$R = \text{Restes Chinois}(R_1, R_2, \ldots R_f)$$

$R$ = 28AA7F12259BFBA81368EB49C93EEAB3F3EC6BF73B0EBD7D3FC8395CFA1AD7FC0F9DAC169A4F6F1 C46FB4C3458D1E37C99123B56446F6C928736B17B4BA4A529

Dans les deux cas, le démonstrateur transmet au contrôleur tout ou partie de chaque engagement **R,** ou bien, un code de hachage **H** obtenu en hachant chaque engagement **R** et un message **M.**

**2) L'acte de défi** consiste à tirer au hasard un ou plusieurs défis $d$ composés chacun de $m$ défis élémentaires $d_1$ $d_2 \ldots d_m$ ; chaque défi élémentaire $d_i$ prend l'une des valeurs de 0 à $v/2$-1.

$$d = d_1 \ d_2 \ \ldots \ d_m$$

Voici un exemple pour le premier jeu de clés avec $k = 6$ et $m = 3$.

$$d_1 = 10110 = 22 = \text{`16'} \ ; d_2 = 00111 = 7 \ ; d_3 = 00010 = 2,$$

$$d = 0 \ || \ d_1 \ || \ d_2 \ || \ d_3 = 01011000 \ 11100010 = 58 \ \text{E2}$$

Voici un exemple pour le second jeu de clés avec $k = 9$ et $m = 2$.

$$d = \ d_1 \ || \ d_2 = 58 \ \text{E2} = \text{soit en décimal, 88 et 226}$$

Le contrôleur transmet au démonstrateur chaque défi $d$.

**3) L'acte de réponse** comporte les opérations suivantes.

Lorsque le témoin dispose des $m$ valeurs privées de $Q_1$ à $Q_m$ et du module $n$, il calcule une ou plusieurs réponses $D$ en utilisant chaque aléa $r$ de l'acte d'engagement et les valeurs privées selon les défis élémentaires.

$$X \equiv Q_1^{d_1} . Q_2^{d_2} \ldots Q_m^{d_m} \ (\mathrm{mod} \ n)$$

$$D \equiv r . X \ (\mathrm{mod} \ n)$$

Voici un exemple pour le premier jeu de clés.

$D$ = FF257422ECD3C7A03706B9A7B28EE3FC3A4E974AEDCDF3865EEF38760B859FDB5333E904BBDD37 B097A989F69085FE8EF6480A2C6A290273479FEC9171990A17

Lorsque le témoin dispose des $f$ facteurs premiers de $p_1$ à $p_f$ et des $m.f$ composantes privées $Q_{ij}$, il calcule une ou plusieurs collections de $f$ composantes de réponse en utilisant chaque collection d'aléas de l'acte d'engagement : chaque collection de composantes de réponse comporte une composante par facteur premier.

$$X_i \equiv Q_{1,i}^{d_1} . Q_{2,i}^{d_2} ... Q_{m,i}^{d_m} \pmod{p_i}$$

$$D_i \equiv r_i.X_i \pmod{p_i}$$

Voici un exemple pour le second jeu de clés.

$D_1 = r_1 . Q_{1,1}{}^{d1} . Q_{2,1}{}^{d2} \pmod{p_1}$ = 02660ADF3C73B6DC15E196152322DDE8EB5B35775E38

$D_2 = r_2 . Q_{1,2}{}^{d1} . Q_{2,2}{}^{d2} \pmod{p_2}$ = 04C15028E5FD1175724376C11BE77052205F7C62AE3B

$D_3 = r_3 . Q_{1,3}{}^{d1} . Q_{2,3}{}^{d2} \pmod{p_3}$ = 0903D20D0C306C8EDA9D8FB5B3BEB55E061AB39CCF52

Pour chaque collection de composantes de réponse, le témoin établit une réponse selon la technique des restes chinois. Il y a autant de réponses que de défis.

$$D = \text{Restes Chinois}(D_1, D_2, \dots D_j)$$

$D$ = 85C3B00296426E97897F73C7DC6341FB8FFE6E879AE12EF1F364CBB55BC44DEC437208CF530F8402 BD9C511F5FB3B3A309257A00195A7305C6FF3323F72DC1AB

Dans les deux cas, le démonstrateur transmet chaque réponse **D** au contrôleur.

**4) L'acte de contrôle** consiste à contrôler que chaque triplet {R, d, D} vérifie une équation du type suivant <u>pour une valeur non nulle</u>,

$$R.\prod_{i=1}^{m} G_i^{d_i} \equiv D^{2^k} \pmod{n} \quad \text{ou bien} \quad R \equiv D^{2^k}.\prod_{i=1}^{m} G_i^{d_i} \pmod{n}$$

ou bien, à rétablir chaque engagement : aucun <u>ne doit être nul</u>.

$$R' \equiv D^{2^k} / \prod_{i=1}^{m} G_i^{d_i} \pmod{n} \quad \text{ou bien} \quad R' \equiv D^{2^k}.\prod_{i=1}^{m} G_i^{d_i} \pmod{n}$$

Eventuellement, le contrôleur calcule ensuite un code de hachage $H'$ en hachant chaque engagement rétabli $R'$ et un message $M'$. L'authentification dynamique est réussie lorsque le contrôleur retrouve ainsi ce qu'il a reçu à l'issue de l'acte d'engagement, c'est-à-dire, tout ou partie de chaque engagement $R$, ou bien, le code de hachage $H$.

Par exemple, une séquence d'opérations élémentaires transforme la réponse $D$ en un engagement $R'$. La séquence comprend $k$ carrés (mod $n$) séparés par $k$-1 divisions ou multiplications (mod $n$) par des nombres de base. Pour la $i$ ième division ou multiplication, qui s'effectue entre le $i$ ième carré et le $i$+1 ième carré, le $i$ ième bit du défi élémentaire $d_1$ indique s'il faut utiliser $g_1$, le i ième bit du défi élémentaire $d_2$ indique s'il faut utiliser $g_2$, ... jusqu'au $i$ ième bit du défi élémentaire $d_m$ qui indique s'il faut utiliser $g_m$.

Voici un exemple pour le premier jeu de clés.

$D^2 \pmod{n}$ = FD12E8E1F1370AEC9C7BA2E05C80AD2B692D341D46F32B93948715491F0EB091B7606CA1E744 E0688367D7BB998F7B73D5F7FDA95D5BD6347DC8B978CA217733

$3 . D^2 \pmod{n}$ = F739B708911166DFE715800D8A9D78FC3F332FF622D3EAB8E7977C68AD44962BEE4DAE3C 0345D1CB34526D3B67EBE8BF987041B4852890D83FC6B48D3EF6A9DF

$3^2. D^4 \pmod{n}$ = 682A7AF280C49FE230BEE354BF6FFB30B7519E3C892DD07E5A781225BBD33920ESADABBC D7284966D71141EAA17AF8826635790743EA7D9A15A33ACC7491D4A7

$3^4 . D^8 \pmod{n}$ = BE9D828989A2C184E34BA8FE0F384811642B7B548F870699E7869F8ED851FC3DB3830B2400 C516511A0C28AFDD210EC3939E69D413F0BABC6DEC441974B1A291

$3^5. 5 . D^8 \pmod{n}$ = 2B40122E225CD858B26D27B768632923F2BBE5DB15CA9EFA77EFA667E554A02AD1A1E4 F6B59BD9E1AE4A537D4AC1E89C2235C363830EBF4DB42CEA3DA98CFE00

$3^{10}. 5^2. D^{16} \pmod{n}$ = BDD3B34C90ABBC870C604E27E7F2E9DB2D38368EA46C931C66F6C7509B118E3C162811 A98169C30D4DEF768397DD B8F6526B6714118DEB627E11FACA4B9DB268

$3" . 5^3 . 7 . D^{16} \pmod{n}$ = DBFA7F40D338DE4FBA73D42DBF427BBF195C13D02AB0FA5F8C8DDB5025E34282 311CEF80BACDCE5D0C433444A2AF2B15318C36FE2AE02F3C8CB25637C9AD712F

$3^{22} \cdot 5^6 \cdot 7^2 \cdot D^{32} \pmod{n}$ = C60CA9C4A11F8AA89D9242CE717E3DC6C1A95D5D09A2278F8FEE1DFD94EE84D09D 000EA8633B53C4A0E7F0AEECB70509667A3CB052029C94EDF27611FAE286A7

$3^{22} \cdot 5^7 \cdot 7^2 \cdot D^{32} \pmod{n}$ = DE40CB6B41C01E722E4F312AE7205F18CDD0303EA52261CB0EA9F0C7E0CD5EC53D 42E5CB645B6BB1A3B00C77886F4AC5222F9C863DACA440CF5F1A8E374807AC

$3^{44} \cdot 5^{14} \cdot 7^4 \cdot D^{64} \pmod{n}$, c'est-à-dire, $3^{2C} \cdot 5^E \cdot 7^4 \cdot D^{40} \pmod{n}$ avec les exposants en hexa = FFDD736B666F41FB771776D9D50DB7CDF03F3D976471B25C56D3AF07BE692CB1FE4EE70FA77032BECD8411 B813B4C21210C6B0449CC4292E5DD2BDB00828AF18

On retrouve bien l'engagement **R**. L'authentification est réussie.

Voici un exemple pour le second jeu de clés.

$D^2 \pmod{n}$ = C66E585D8F132F7067617BC6D00BA699ABD74FB9D13E24E6A6692CC8D2FC7B57352D66D34 F5273C13F20E3FAA228D70AEC693F8395ACEF9206B172A8A2C2CCBB

$3 \cdot D^2 \pmod{n}$ = 534C6114D385C3E15355233C5B00D09C2490D1B8D8ED3D59213CB83EAD41C309A187519E5 F501C4A45C37EB2FF38FBF201D6D138F3999FC1D06A2B2647D48283

$3^2 \cdot D^4 \pmod{n}$ = A9DC8DEA867697E76B4C18527DFFC49F4658473D034EC1DDE0EB21F6F65978BE477C4231A C9B1EBD93D5D49422408E4715919023B16BC3C6C46A92BBD326AADF

$2 \cdot 3^3 \cdot D^4 \pmod{n}$ = FB2D57796039DFC4AF9199CAD44B66F257A1FF3F2BA4C12B0A8496A0148B4DFBAFE838E0 B5A7D9FB4394379D72A107E45C51FCDB7462DO3A35002D29823A2BB5

$2^2 \cdot 3^6 \cdot D^8 \pmod{n}$ = 4C210F96FF6C77541910623B1E49533206DFB9E91 6521F305F12C5DB054D4E1BF3A37 FA293854DF02B49283B6DE5E5D82ACB23DAF1A0D5A721A1890D03A00BD8

$2^2 \cdot 3^7 \cdot D^8 \pmod{n}$ = E4632EC4FE4565FC4B3126B15ADBF996149F2DBB42F65D911D3851910FE7EA53DAEA7EE7 BA8FE9D081DB78B249B1B18880616B90D4E280F564E49B270AE02388

$2^4 \cdot 3^{14} \cdot D^{16} \pmod{n}$ = ED3DDC716AE3D1EA74C5AF935DE814BCC2C78B12A6BB29FA542F9981C5D954F53D153 B9F0I98BA82690EF665C17C399607DEA54E218C2C01A890D422EDA16FA3

$2^5 \cdot 3^{14} \cdot D^{16} \pmod{n}$ = DA7C64E0E8EDBE9CF823B71AB13F17E11614876B000FBB473F5FCBF5A5D8D26C7B2A 05D03BDDD588164E562D0F57AE94AE0AD3F35C61C0892F4C91DC0B08ED6F

$2^{10} \cdot 3^{28} \cdot D^{32} \pmod{n}$ = 6ED6AFC5A87D2DD117B0D89072C99FB9DC95D558F65B6A1967E6207D4ADBBA32001D 3828A35069B256A07C3D722F17DA30088E6E739FBC419FD7282D16CD6542

$2^{11} \cdot 3^{28} \cdot D^{32} \pmod{n}$ = DDAD5F8B50FA5BA22F61B120E5933F73B92BAAB1ECB6D432CFCC40FA95B7746 4003A705146A0D364AD40F87AE45E2FB460111CDCE73F78833FAE505A2D9ACA84

$2^{22} \cdot 3^{56} \cdot D^{64} \pmod{n}$ = A466DOCB17614EFD961000BD9EABF4F02136F8307101882BC1764DBAACB715EF BF5D8309AE001EB5DEDA8F000E44B3D4578E5CA55797FD4BD1F8E919BE787BD0

$2^{44} \cdot 3^{112} \cdot D^{128} \pmod{n}$ = 925B0EDF5047EFEC5AFABDC03A830919761B8FBDD2BF934E2A8A31E29B976274 D513007EF1269E4638B4F65F8FDEC740778BDC178AD7AF2968689B930D5A2359

$2^{44} \cdot 3^{113} \cdot D^{128} \pmod{n}$ = B711D89C03FDEA8D1F889134A4F809B3F2D8207F2AD8213D169F2E99ECEC4FE0803 8900F0C203B55EE4F4C803BFB912A04F11D9DB9D076021764BC4F57D47834

$2^{88} \cdot 3^{226} \cdot D^{236} \pmod{n}$ = 41A83F119FFE4A2F4AC7E5597A5D0BEB4D4C08D19E597FD034FE720235894363 A19D6BC5AF323D24B1B7FCFD8DFCC628021B4648D7EF757A3E461EF0CFF0EA13

$2^{176} \cdot 3^{452} \cdot D^{512} \pmod{n}$, soit $4^{88} \cdot 9^{226} \cdot D^{512} \pmod{n}$ = 28AA7F12259BFBA81368EB49 C93EEAB3F3EC6BF73B0EBD7D3FC8395CFA1AD7FC0F9DAC169A4F6F1C46FB4C3458D1E37C99123B56446F6 C928736B17B4BA4A529

On retrouve bien l'engagement R. L'authentification est réussie.

## Signature numérique

Le mécanisme de signature numérique permet à une entité appelée **signataire** de produire des messages signés et à une entité appelée **contrôleur** de vérifier des messages signés. Le message *M* est une séquence binaire quelconque : il peut être vide. Le message *M* est signé en lui adjoignant un appendice de signature qui comprend un ou plusieurs engagements et / ou défis, ainsi que les réponses correspondantes.

Le contrôleur dispose de la même fonction de hachage, des paramètres $k$ et $m$ et du module *n.* Les paramètres **$k$** et **$m$** renseignent le contrôleur. D'une part, chaque défi élémentaire, de $d_1$ à $d_m$, doit prendre une valeur de 0 à $2^{k-1}-1$ (les valeurs de $v/2$ à $v-1$ ne sont pas utilisées). D'autre part, chaque défi $d$ doit comporter m défis élémentaires notés de $d_1$ à $d_m$, autant que de nombres de base. En outre, faute d'indication contraire, les $m$ nombres de base, de $g_1$ à $g_m$, sont les $m$ premiers nombres premiers. Avec $(k-1).m$ valant de 15 à 20, on peut signer avec quatre triplets GQ2 produits en parallèle ; avec $(k-1).m$ valant 60 ou plus, on peut signer avec un seul triplet GQ2. Par exemple, avec $k = 9$ et $m = 8$, un seul triplet GQ2 suffit ; chaque défi comporte huit octets et les nombres de base sont 2, 3, 5, 7, 11, 13, 17 et 19.

**L'opération de signature** est une séquence de trois actes : un acte d'engagement, un acte de défi et un acte de réponse. Chaque acte produit un ou plusieurs triplets GQ2 comprenant chacun : un engagement $R$ ($\neq 0$), un défi $d$ composé de $m$ défis élémentaires notés par $d_1, d_2, ... d_m$ et une réponse $D$ ($\neq 0$).

Le signataire dispose d'une fonction de hachage, du paramètre $k$ et de la clé privée GQ2, c'est-à-dire, de la factorisation du module n selon l'une des trois représentations évoquées ci-dessus. **Au sein du signataire, on peut isoler un témoin qui exécute les actes d'engagement et de réponse,** de manière à isoler les fonctions et les paramètres les plus sensibles du démonstrateur. Pour calculer engagements et réponses, le témoin dispose du paramètre $k$ et de la clé privée GQ2, c'est-à-dire, de la factorisation du module $n$ selon l'une des trois représentations évoquées ci-dessus. Le témoin ainsi isolé est semblable au témoin défini au sein du démonstrateur.

Il peut correspondre à une réalisation particulière, par exemple, • une carte à puce reliée à un PC formant ensemble le signataire, ou encore, • des programmes particulièrement protégés au sein d'un PC, ou encore, • des programmes particulièrement protégés au sein d'une carte à puce.

**1) L'acte d'engagement** comprend les opérations suivantes.

Lorsque le témoin dispose des $m$ valeurs privées de $Q_1$ à $Q_m$ et du module $n$, il tire au hasard et en privé un ou plusieurs aléas $r$ ($0 < r < n$) ; puis, par $k$ élévations successives au carré (mod $n$), il transforme chaque aléa $r$ en un engagement $R$.

$$R \equiv r^v \pmod{n}$$

Lorsque le témoin dispose des $f$ facteurs premiers de $p_1$ à $p_f$ et des $m.f$ composantes privées $Q_{ij}$, il tire au hasard et en privé une ou plusieurs collections de $f$ aléas : chaque collection comporte un aléa $r_i$ par facteur premier $p_1$ ($0 < r_i < p_i$) ; puis, par $k$ élévations successives au carré (mod $p_i$), il transforme chaque aléa $r_i$ en une composante d'engagement $R_i$.

$$R_i \equiv r_i^v \pmod{p_i}$$

Pour chaque collection de $f$ composantes d'engagement, le témoin établit un engagement selon la technique des restes chinois. Il y a autant d'engagements que de collections d'aléas.

$$R = \text{Restes Chinois}(R_1, R_2, \dots R_f)$$

**2) L'acte de défi** consiste à hacher tous les engagements $R$ et le message à signer $M$ pour obtenir un code de hachage à partir duquel le signataire forme un ou plusieurs défis comprenant chacun $m$ défis élémentaires ; chaque défi élémentaire prend une valeur de 0 à $v/2-1$ ; par exemple, avec $k = 9$ et $m = 8$, chaque défi comporte huit octets. Il y a autant de défis que d'engagements.

$d = d_1 \, d_2 \dots d_m$, extraits du résultat Hash($M$, $R$)

**3) L'acte de réponse** comporte les opérations suivantes.

Lorsque la témoin dispose des $m$ valeurs privées de $Q_1$ à $Q_m$ et du module $n$, il calcule une ou plusieurs réponses $D$ en utilisant chaque aléa $r$ de l'acte d'engagement et les valeurs privées selon les défis élémentaires.

$$X \equiv Q_1^{d_1}.Q_2^{d_2}...Q_m^{d_m} \pmod{n}$$

$$D \equiv r.X \pmod{n}$$

Lorsque le témoin dispose des $f$ facteurs premiers de $p_1$ à $p_f$ et des $m.f$ composantes privées $Q_{ij}$, il calcule une ou plusieurs collections de $f$ composantes de réponse en utilisant chaque collection d'aléas de l'acte d'engagement : chaque collection de composantes de réponse comporte une composante par facteur premier.

$$X_i \equiv Q_{1,i}^{d_1}.Q_{2,i}^{d_2}...Q_{m,i}^{d_m} \pmod{p_i}$$

$$D_i \equiv r_i.X_i \pmod{p_i}$$

Pour chaque collection de composantes de réponse, le témoin établit une réponse selon la technique des restes chinois. Il y a autant de réponses que de défis.

$$D = \text{Restes Chinois}(D_1, D_2, \ldots D_f)$$

**Le signataire signe le message *M*** en lui adjoignant un appendice de signature comprenant :

- ou bien, chaque triplet GQ2, c'est-à-dire, chaque engagement *R*, chaque défi *d* et chaque réponse *D,*
- ou bien, chaque engagement *R* et chaque réponse *D* correspondante,
- ou bien, chaque défi *d* et chaque réponse *D* correspondante.

**Le déroulement de l'opération de vérification** dépend du contenu de l'appendice de signature. On distingue les trois cas.

**Au cas où l'appendice comprend un ou plusieurs triplets,** l'opération de contrôle comporte deux processus indépendants dont la chronologie est indifférente. Le contrôleur accepte le message signé si et seulement si les deux conditions suivantes sont remplies.

D'une part, chaque triplet doit être cohérent (une relation appropriée du type suivant doit être vérifiée) et recevable (la comparaison doit se faire sur une valeur non nulle).

$$R.\prod_{i=1}^{m} G_i^{d_i} \equiv D^{2^k} \pmod{n} \quad \text{ou bien} \quad R \equiv D^{2^k}.\prod_{i=1}^{m} G_i^{d_i} \pmod{n}$$

Par exemple, on transforme la réponse *D* par une séquence d'opérations élémentaires : *k* carrés (mod *n*) séparés par *k*-1 multiplications ou divisions (mod *n*) par des nombres de base. Pour la *i* ième multiplication ou division, qui s'effectue entre le *i* ième carré et le *i*+1 ième carré, le *i* ième bit du défi élémentaire $d_1$ indique s'il faut utiliser $g_1$, le *i* ième bit du défi élémentaire $d_2$ indique s'il faut utiliser $g_2$, ... jusqu'au *i* ième bit du défi élémentaire $d_m$ qui indique s'il faut utiliser $g_m$. On doit ainsi retrouver chaque engagement *R* présent dans l'appendice de signature.

D'autre part, le ou les triplets doivent être liés au message *M*. En hachant tous les engagements *R* et le message *M,* on obtient un code de hachage à partir duquel on doit retrouver chaque défi *d*.

$d = d_1 \, d_2 \ldots d_m$, identiques à ceux extraits du résultat Hash(*M, R*)

**Au cas où l'appendice ne comprend pas de défi,** l'opération de contrôle commence par la reconstitution de un ou plusieurs défis *d'* en hachant tous les engagements *R* et le message *M.*

$d' = d'_1 \, d'_2 \ldots d'_m$, extraits du résultat Hash(*M, R*)

Ensuite, le contrôleur accepte le message signé si et seulement si chaque triplet est cohérent (une relation appropriée du type suivant est vérifiée) et recevable (la comparaison se fait sur une valeur non nulle).

$$R.\prod_{i=1}^{m} G_i^{d'_i} \equiv D^{2^k} \pmod{n} \quad \text{ou bien} \quad R \equiv D^{2^k}.\prod_{i=1}^{m} G_i^{d'_i} \pmod{n}$$

**Au cas où l'appendice ne comprend pas d'engagement,** l'opération de contrôle commence par la reconstitution de un ou plusieurs engagements *R'* selon une des deux formules suivantes, celle qui est appropriée. Aucun engagement rétabli ne doit être nul.

$$R' \equiv D^{2^k} / \prod_{i=1}^{m} G_i^{d_i} \pmod{n} \quad \text{ou bien} \quad R' \equiv D^{2^k}.\prod_{i=1}^{m} G_i^{d_i} \pmod{n}$$

Ensuite, le contrôleur doit hacher tous les engagements *R'* et le message *M* de façon à reconstituer chaque défis *d.*

$d = d_1 \, d_2 \ldots d_m$, identiques à ceux extraits du résultat Hash(*M, R'*)

Le contrôleur accepte le message signé si et seulement si chaque défi reconstitué est identique au défi correspondant figurant en appendice.

Dans la présente demande, on a montré qu'il existait des couples de valeurs-privée *Q* et publique *G* permettant de mettre en oeuvre le procédé, le système et le dispositif selon l'invention destiné à prouver l'authenticité d'une entité et/ou l'intégrité et/ou l'authenticité d'un message.

Dans la demande pendante déposée le même jour que la présente demande par France Télécom, TDF et la Société Math RiZK, publiée sous le numéro WO 00/46947, et ayant pour inventeurs Louis Guillou et Jean-Jacques Quisquater, on a décrit un procédé pour produire des jeux de clés GQ2, à savoir, des modules *n* et des couples de valeurs publique *G* et privée *Q* dans le cas où l'exposant v est égal à $2^k$.

## Revendications

**1.** Procédé destiné à prouver à une entité contrôleur,

- l'authenticité d'une entité et/ou
- l'intégrité d'un message **M** associé à cette entité, au moyen de utilisant tout ou partie des paramètres suivants ou dérivés de ceux-ci :
- **m** couples de valeurs privées **Q₁, Q₂,...Qₘ** et publiques **G₁, G₂,..., Gₘ**, **m** étant supérieur ou égal à 1
- un module public **n** constitué par le produit de **f** facteurs premiers **p₁, p₂, ...pf**, **f** étant supérieur ou égal à 2,
- un exposant public **v** ;

ledit module, ledit exposant et lesdites valeurs étant liés par des relations du type:

$$G_i \cdot Q_i^v \equiv 1 \cdot \bmod n \text{ ou } G_i \equiv Q_i^v \bmod n;$$

ledit exposant **v** étant tel que

$$v = 2^k$$

où k est un paramètre de sécurité plus grand que 1 ;
ladite valeur publique **Gᵢ** étant le carré **gᵢ²** d'un nombre de base **gᵢ** inférieur aux **f** facteurs premiers **p₁, p₂, ... pf** ; le nombre de base **gᵢ** étant tel que :

les deux équations :

$$x^2 \equiv g_i \bmod n \quad \text{et} \quad x^2 \equiv - g_i \bmod n$$

n'ont pas de solution en x dans l'anneau des entiers modulo n et tel que :
l'équation :

$$x^v \equiv g_i^2 \bmod n$$

a des solutions en x dans l'anneau des entiers modulo **n** ;

ledit procédé met en oeuvre selon les étapes suivantes une entité appelée témoin disposant des **f** facteurs premiers **pᵢ** et/ou des paramètres des restes chinois des facteurs premiers et/ou du module public **n** et/ou des **m** valeurs privées **Qᵢ** et/ou des **f.m** composantes **Qᵢ,ⱼ** avec **Qᵢ,ⱼ ≡ Qᵢ mod pⱼ**, des valeurs privées **Q₁** et de l'exposant public **v** ;

- le témoin calcule des engagements **R** dans l'anneau des entiers modulo **n** ; chaque engagement étant calculé :
- soit en effectuant des opérations du type

$$R = r^v \bmod n$$

où r est un aléa tel que **0 < r < n,**

• soit

•• en effectuant des opérations du type

$$R_i \equiv r_i^{\,v} \bmod p_i$$

où $r_i$ est un aléa associé au nombre premier $P_i$ tel que $0 < r_i < p_i$, chaque $r_i$ appartenant à une collection d'aléas $\{r_1, r_2, \dots r_f\}$,
•• puis en appliquant la méthode des restes chinois ;

- le témoin reçoit un ou plusieurs défis **d** ; chaque défi **d** comportant **m** entiers $d_i$ ci-après appelés défis élémentaires ; le témoin calcule à partir de chaque défi **d** une réponse **D,**
• soit en effectuant des opérations du type :

$$D \equiv r \cdot Q_1^{\,d1} \cdot Q_2^{\,d2} \cdot \ldots Q_m^{\,dm} \bmod n$$

• soit

• • en effectuant des opérations du type :

$$D_i \equiv r_i \cdot Q_{i,1}^{\,d1} \cdot Q_{i,2}^{\,d2} \cdot \ldots Q_{i,m}^{\,dm} \bmod p_i$$

• • puis en appliquant la méthode des restes chinois ;

ledit procédé étant tel qu'il y a autant de réponses **D** que de défis **d** que d'engagements **R,** chaque groupe de nombres **R, d, D** constituant un tripler noté {R, d, D},
ledit procédé comprenant la transmission dudit un ou plusieurs engagements R et de ladite une ou plusieurs réponse D à l'entité contrôleur.

2. Terminal associé à une entité, se présentant notamment sous la forme d'un objet nomade, par exemple sous la forme d'une carte bancaire à microprocesseur, destiné à prouver à une entité contrôleur,

- l'authenticité de ladite entité et/ou
- l'intégrité d'un message **M** associé à ladite entité,

au moyen de utilisant tout ou partie des paramètres suivants ou dérivés de ceux-ci:

- **m** couples de valeurs privées $Q_1, Q_2, \dots Q_m$ et publiques $G_1, G_2, \dots G_m$, **m** étant supérieur ou égal à 1,
- un module public **n** constitué par le produit de **f** facteurs premiers $p_1, \dots p_f$, **f** étant supérieur ou égal à 2, et
- un exposant public **v** ;

ledit module, ledit exposant et lesdites valeurs étant liés par des relations du type:

$$G_i \times Q_i^{\,v} \equiv 1 \bmod n \text{ ou } G_i \equiv Q_i^{\,v} \bmod n;$$

ledit exposant **v** étant tel que

$$v = 2^k$$

où **k** est un paramètre de sécurité plus grand que 1 ;
ladite valeur publique $G_i$ étant le carré $g_i^2$ d'un nombre de base $g_i$ inférieur aux **f** facteurs premiers $p_1, \dots p_f$ ;
le nombre de base $g_i$ étant tel que les deux équations :

$$x^2 \equiv g_i \bmod n \quad \text{et} \quad x^2 \equiv - g_i \bmod n$$

n'ont pas de solution en **x** dans l'anneau des entiers modulo **n** ;
et tel que l'équation:

$$x^v \equiv g_i^2 \bmod n$$

a des solutions en x dans l' anneau des entiers modulo n ;
ledit terminal comprenant un dispositif témoin comportant ;

- une zone mémoire contenant les **f** facteurs premiers $p_i$ et/ou les parametres des restes chinois des facteurs premiers et/ou le module public **n** et/ou les **m** valeurs privées $Q_i$ et/ou les **f,m** composantes $Q_{i,j}$, telles que $Q_{i,j} \equiv Q_i \bmod p_j$, des valeurs privées $Q_i$ et l'exposant public **v** ;
- des moyens de production d'aléas ;
- des moyens de calcul des engagements $R$ pour calculer des engagements $R$ dans l'anneau des entiers modulo $n$, chaque engagement étant calculé :

    • soit en effectuant des opérations du type :

$$R = r^v \bmod n,$$

    où $r$ est un aléa produit par les moyens de production d'aléas, $r$ étant tel que $0 < r < n$,
    • soit en effectuant des opérations du type :

$$R_i = r_i^v \bmod p_i,$$

    où $r_i$ est un aléa associé au nombre premier $p_i$ tel que $0 < r_i < p_i$, chaque $r_i$ appartenant à une collection d'aléas $\{r_1, r_2, ... r_f\}$ produits par les moyens de production d'aléas, puis en appliquant la méthode des restes chinois ;

- des moyens de réception des défis $d$ pour recevoir un ou plusieurs défis $d$, chaque défi $d$ comportant $m$ entiers $d_i$ appelés défis élémentaires ;
- des moyens de calcul des réponses $D$ pour calculer à partir de chaque défi $d$ une réponse $D$ :

    • soit en effectuant des opérations du type :

$$D = r \times Q_1^{d_1} \times Q_2^{d_2} \times ... \times Q_m^{d_m} \bmod n,$$

    • soit en effectuant des opérations du type :

$$D_i = r_i \times Q_{i,1}^{d_1} \times Q_{i,2}^{d_2} \times ... \times Q_{i,m}^{d_m} \bmod p_i,$$

    puis en appliquant la méthode des restes chinois ; et

- des moyens de transmission pour transmettre un ou plusieurs engagements $R$ et une ou plusieurs réponses $D$ ;
ledit terminal étant tel qu'il y a autant de réponses $D$ que de défis $d$ que d'engagements $R$, chaque groupe de nombres $R, d, D$ constituant un triplet noté $\{R,d,D\}$.

3. Terminal selon la revendication 2 destiné à prouver l'authenticité d'une entité cryptographique appelée démonstrateur à une entité appelée contrôleur,
ledit terminal comportant un dispositif démonstrateur associé audit démonstrateur, ledit dispositif démonstrateur étant interconnecté audit dispositif témoin par des moyens d'interconnexion pouvant se présenter notamment sous la forme de microcircuits logiques dans un objet nomade, par exemple sous la forme d'un microprocesseur dans une carte bancaire à microprocesseur,

ledit dispositif démonstrateur comportant des moyens de connexion pour le connecter électriquement, électromagnétiquement, optiquement ou de manière acoustique, notamment via un réseau de communication informatique, à un dispositif contrôleur associé audit contrôleur, ledit dispositif contrôleur se présentant notamment sous la forme d'un terminal ou d'un serveur distant ;
**caractérisé en ce que** :

- le dispositif témoin comporte des moyens de transmission pour transmettre tout ou partie de chaque engagement $R$ au dispositif démonstrateur, via les moyens d'interconnexion,
- le dispositif démonstrateur comporte des moyens de transmission pour transmettre tout ou partie de chaque engagement $R$ au dispositif contrôleur, via les moyens de connexion,
- les moyens de réception des défis $d$ du dispositif témoin sont aptes à recevoir chaque défi $d$ provenant du dispositif contrôleur via les moyens de connexion entre le dispositif contrôleur et le dispositif démonstrateur et via les moyens d'interconnexion entre le dispositif démonstrateur et le dispositif témoin, et
- les moyens de transmission du démonstrateur sont aptes à transmettre chaque réponse $D$ au dispositif contrôleur.

**4.** Terminal selon la revendication 2 destiné à prouver à une entité appelée contrôleur l'intégrité d'un message $M$ associé à une entité appelée démonstrateur,

ledit terminal comportant un dispositif démonstrateur associé audit démonstrateur, ledit dispositif démonstrateur étant interconnecté audit dispositif témoin par des moyens d'interconnexion pouvant se présenter notamment sous la forme de microcircuits logiques dans un objet nomade, par exemple sous la forme d'un microprocesseur dans une carte bancaire à microprocesseur,

ledit dispositif démonstrateur comportant des moyens de connexion pour le connecter électriquement, électromagnétiquement, optiquement ou de manière acoustique, notamment via un réseau de communication informatique, à un dispositif contrôleur associé audit contrôleur, ledit dispositif contrôleur se présentant notamment sous la forme d'un terminal ou d'un serveur distant ;
**caractérisé en ce que** :

- le dispositif témoin comporte des moyens de transmission pour transmettre tout ou partie de chaque engagement $R$ au dispositif démonstrateur, via les moyens d'interconnexion,
- le dispositif démonstrateur comporte des moyens de calcul aptes à appliquer une fonction de hachage $h$ ayant comme arguments le message $M$ et tout ou partie de chaque engagement $R$, pour calculer au moins un jeton $T$,
- le dispositif démonstrateur comporte aussi des moyens de transmission pour transmettre chaque jeton $T$, via les moyens de connexion, au dispositif contrôleur, ce dernier comportant des moyens de production de défis pour produire, après avoir reçu le jeton $T$, des défis $d$ en nombre égal au nombre d'engagements $R$,
- les moyens de réception des défis $d$ du dispositif témoin sont aptes à recevoir chaque défi $d$ provenant du dispositif contrôleur via les moyens de connexion entre le dispositif contrôleur et le dispositif démonstrateur et via les moyens d'interconnexion entre le dispositif démonstrateur et le dispositif témoin, et
- les moyens de transmission du démonstrateur sont aptes à transmettre chaque réponse $D$ au dispositif contrôleur.

**5.** Terminal selon la revendication 2 destiné à produire la signature numérique d'un message $M,$ ci-après désigné le message signé, par une entité appelée signataire ;
le message signé comprenant :

- le message $M$,
- les défis $d$ et/ou les engagements $R,$ et
- les réponses $D$ ;

ledit terminal comportant un dispositif signataire associé audit signataire, ledit dispositif signataire étant interconnecté audit dispositif témoin par des moyens d'interconnexion pouvant se présenter notamment sous la forme de microcircuits logiques dans un objet nomade, par exemple sous la forme d'un microprocesseur dans une carte bancaire à microprocesseur,

ledit dispositif signataire comportant des moyens de connexion pour le connecter électriquement, électromagnétiquement, optiquement ou de manière acoustique, notamment via un réseau de communication informatique, à un dispositif contrôleur associé à une entité appelée contrôleur, ledit dispositif contrôleur se présentant notamment sous la forme d'un terminal ou d'un serveur distant ; **caractérisé en ce que** :

- le dispositif témoin comporte des moyens de transmission pour transmettre tout ou partie de chaque engagement $R$ au dispositif signataire, via les moyens d'interconnexion,
- le dispositif signataire comporte des moyens de calcul aptes à appliquer une fonction de hachage $h$ ayant comme arguments le message $M$ et tout ou partie de chaque engagement $R$, pour calculer un train binaire et extraire de ce train binaire des défis $d$ en nombre égal au nombre d'engagements $R$,
- les moyens de réception des défis $d$ du dispositif témoin sont aptes à recevoir chaque défi $d$ provenant du dispositif signataire, via les moyens d'interconnexion, et
- le dispositif témoin comporte des moyens de transmission pour transmettre les réponses $D$ au dispositif signataire, via les moyens d'interconnexion.

6. Dispositif contrôleur, se présentant notamment sous la forme d'un terminal ou d'un serveur distant, associé à une entité appelée contrôleur,

possédant des moyens pour contrôler :

- l'authenticité d'une entité et/ou
- l'intégrité d'un message $M$ associé à cette entité

au moyen de :

- $m$ couples de valeurs publiques $G_1$, $G_2$,...,$G_m$, $m$ étant supérieur ou égal à 1,
- un module public $n$ constitué par le produit de $f$ facteurs premiers $p_1$,...,$p_f$, $f$ étant supérieur ou égal à 2, et
- un exposant public $v$ ;

ledit module, ledit exposant et lesdites valeurs étant liés par des relations du type :

$$G_i \times Q_i^v = 1 \bmod n \text{ ou } G_i = Q_i^v \bmod n \text{ ;}$$

où $Q_i$ désigne une valeur privée, associée à la valeur publique $G_i$,
ledit exposant v étant tel que :

$$v = 2^k,$$

où $k$ est un paramètre de sécurité plus grand que 1 ;
ladite valeur publique $G_i$ étant le carré $g_i^2$ d'un nombre de base $g_i$ inférieur aux $f$ facteurs premiers $p_1$,...,$p_f$ :
le nombre de base $g_i$ étant tel que les deux équations :

$$x^2 = g_i \bmod n \qquad \text{et} \qquad x^2 = -g_i \bmod n$$

n'ont pas de solution en $x$ dans l'anneau des entiers modulo $n$,
et tel que l'équation :

$$x^v = g_i^2 \bmod n$$

a des solutions en $x$ dans l'anneau des entiers modulo $n$;
ledit dispositif contrôleur comportant des moyens de connexion pour le connecter électriquement, électromagnétiquement, optiquement ou de manière acoustique, notamment via un réseau de communication informatique, à un dispositif démonstrateur associé audit démonstrateur ;
**caractérisé en ce qu'**il comporte aussi

- des moyens de réception de tout ou partie des engagements $R$ provenant du dispositif démonstrateur, via les moyens de connexion,
- des moyens de production de défis pour produire, après avoir reçu tout ou partie de chaque engagement $R$,

des défis $d$ en nombre égal au nombre d'engagements $R$, chaque défi $d$ comportant $m$ entiers $d_i$ appelés défis élémentaires,

- des moyens de transmission pour transmettre les défis $d$ au démonstrateur, via les moyens de connexion,

des moyens de réception des réponses $D$ provenant du dispositif démonstrateur, via les moyens de connexion,

- des moyens de calcul, et
- des moyens de comparaison,

tels que :

- dans le cas où les moyens de réception du dispositif contrôleur ont reçu une partie de chaque engagement $R$ :

  - les moyens de calcul du dispositif contrôleur, disposant des $m$ valeurs publiques $G_1, G_2, ..., G_m$. sont aptes à calculer à partir de chaque défi $d$ et de chaque réponse $D$ un engagement reconstruit $R'$ satisfaisant à une relation du type :

$$R' = G_1^{d_1} \times G_2^{d_2} \times ... \times G_m^{d_m} \times D^v \bmod n$$

  ou à une relation du type :

$$R' = D^v / G_1^{d_1} \times G_2^{d_2} \times ... \times G_m^{d_m} \bmod n \text{, et}$$

  - les moyens de comparaison du dispositif contrôleur sont aptes à comparer chaque engagement reconstruit $R'$ à tout ou partie de chaque engagement $R$ reçu ;

- dans le cas où les moyens de réception du dispositif contrôleur ont reçu l'intégralité de chaque engagement $R$ :

  - les moyens de calcul et les moyens de comparaison du dispositif contrôleur, disposant des m valeurs publiques $G_1, G_2, ..., G_m$, sont aptes à vérifier que chaque engagement R satisfait à une relation du type :

$$R = G_1^{d_1} \times G_2^{d_2} \times ... \times G_m^{d_m} \times D^v \bmod n$$

  ou à une relation du type :

$$R = D^v / G_1^{d_1} \times G_2^{d_2} \times ... \times G_m^{d_m} \bmod n .$$

**7.** Dispositif contrôleur, se présentant notamment sous la forme d'un terminal ou d'un serveur distant, associé à une entité appelée contrôleur,

possédant des moyens pour contrôler :

- l'authenticité d'une entité et/ou
- l'intégrité d'un message $M$ associé à cette entité

au moyen de :

- $m$ couples de valeurs publiques $G_1, G_2, ..., G_m$, m étant supérieur ou égal à 1,
- un module public n constitué par le produit de $f$ facteurs premiers $p_1, ... p_f$, $f$ étant supérieur ou égal à 2, et
- un exposant public $v$ ;

ledit module, ledit exposant et lesdites valeurs étant liés par des relations du type :

$$G_i \times Q_i^v = 1 \bmod n \text{ ou } G_i = Q_i^v \bmod n ;$$

où $Q_i$ désigne une valeur privée, associée à la valeur publique $G_i$,
ledit exposant $v$ étant tel que :

$$v = 2^k \, ,$$

où $k$ est un paramètre de sécurité plus grand que 1 ;
ladite valeur publique $G_i$ étant le carré $g_i^2$ d'un nombre de base $g_i$ inférieur aux $f$ facteurs premiers $p_1,...,p_f$ ;
le nombre de base $g_i$ étant tel que les deux équations :

$$x^2 = g_i \bmod n \qquad \text{et} \qquad x^2 = -g_i \bmod n$$

n'ont pas de solution en $x$ dans l'anneau des entiers modulo $n$,
et tel que l'équation :

$$x^v = g_i^2 \bmod n$$

a des solutions en $x$ dans l'anneau des entiers modulo $n$;
ledit dispositif contrôleur comportant des moyens de connexion pour le connecter électriquement, électromagnétiquement, optiquement ou de manière acoustique, notamment via un réseau de communication informatique, à un dispositif démonstrateur associé audit démonstrateur ;
**caractérisé en ce qu'**il comporte aussi :

- des moyens de réception de jetons $T$ provenant dudit dispositif démonstrateur, via les moyens de connexion,
- des moyens de production de défis pour produire, après avoir reçu le jeton $T$, des défis $d$ en nombre égal au nombre d'engagements $R$, chaque défi $d$ comportant $m$ entiers $d_i$ appelés défis élémentaires,
- des moyens de transmission pour transmettre les défis $d$ audit démonstrateur, via les moyens de connexion,
- des moyens de réception des réponses $D$ provenant du dispositif démonstrateur, via les moyens de connexion,
- des moyens de calcul, disposant des $m$ valeurs publiques $G_1,G_2,...,G_m$, pour d'une part, calculer à partir de chaque défi $d$ et de chaque réponse $D$ un engagement reconstruit $R'$ satisfaisant à une relation du type :

$$R' = G_1^{d_1} \times G_2^{d_2} \times ... \times G_m^{d_m} \times D^v \bmod n$$

ou à une relation du type :

$$R' = D^v \big/ G_1^{d_1} \times G_2^{d_2} \times ... \times G_m^{d_m} \bmod n$$

puis d'autre part, calculer en appliquant une fonction de hachage $h$ ayant comme arguments le message $M$ et tout ou partie de chaque engagement reconstruit $R'$, un jeton $T'$, et
- des moyens de comparaison pour comparer le jeton calculé $T'$ au jeton $T$ reçu.

8. Dispositif contrôleur, se présentant notamment sous la forme d'un terminal ou d'un serveur distant, associé à une entité appelée contrôleur,
possédant des moyens pour contrôler :

- l'authenticité d'une entité et/ou
- l'intégrité d'un message $M$ associé à cette entité

au moyen de :

- $m$ couples de valeurs publiques $G_1,G_2,...,G_m$, $m$ étant supérieur ou égal à 1,
- un module public $n$ constitué par le produit de $f$ facteurs premiers $p_1,...,p_f$, $f$ étant supérieur ou égal à 2, et
- un exposant public $v$ ;

ledit module, ledit exposant et lesdites valeurs étant liés par des relations du type :

$$G_i \times Q_i^v = 1 \bmod n \quad \text{ou} \quad G_i = Q_i^v \bmod n \; ;$$

où $Q_i$ désigne une valeur privée, associée à la valeur publique $G_i$,
ledit exposant v étant tel que :

$$v = 2^k \, ,$$

où $k$ est un paramètre de sécurité plus grand que 1 ;
ladite valeur publique $G_i$ étant le carré $g_i^2$ d'un nombre de base $g_i$ inférieur aux $f$ facteurs premiers $p_1,...,p_f$ ;
le nombre de base $g_i$ étant tel que les deux équations :

$$x^2 = g_i \bmod n \qquad \text{et} \qquad x^2 = -g_i \bmod n$$

n'ont pas de solution en $x$ dans l'anneau des entiers modulo $n$,
et tel que l'équation :

$$x^v = g_i^2 \bmod n$$

a des solutions en $x$ dans l'anneau des entiers modulo $n$;
le dispositif contrôleur destiné à contrôler l'authenticité d'un message $M$ en contrôlant un message signé émis par un dispositif signataire associé à une entité cryptographique appelée signataire disposant d'une fonction de hachage $h$ (*message, R*).
ledit message signé comprenant :

- le message $M$,
- des défis $d$ et/ou des engagements $R$, et
- des réponses $D$ ;

ledit dispositif contrôleur comportant des moyens de connexion pour le connecter électriquement, électromagnétiquement, optiquement ou de manière acoustique, notamment via un réseau de communication informatique, audit dispositif signataire ; **caractérisé en ce qu'**il comprend :

- des moyens de calcul, et
- des moyens de comparaison,

tels que, ledit dispositif contrôleur ayant reçu le message signé du dispositif signataire, via les moyens de connexion :

- dans le cas où le dispositif contrôleur dispose des engagements $R$, des défis $d$, des réponses $D$ :

•• les moyens de calcul et de comparaison du dispositif contrôleur sont aptes à vérifier que les engagements $R$, les défis $d$ et les réponses $D$ satisfont à des relations du type :

$$R = G_1^{d_1} \times G_2^{d_2} \times ... \times G_m^{d_m} \times D^v \bmod n$$

ou à des relations du type :

$$R = D^v / G_1^{d_1} \times G_2^{d_2} \times ... \times G_m^{d_m} \bmod n \, , \text{ et}$$

•• les moyens de calcul et de comparaison du dispositif contrôleur sont aptes à vérifier que le message $M$, les défis $d$ et les engagements $R$ satisfont à la fonction de hachage $d = h$ (*message, R*) ;

- dans le cas où le dispositif contrôleur dispose des défis *d* et des réponses *D* :

• • les moyens de calcul du dispositif contrôleur sont aptes à calculer, à partir de chaque défi *d* et de chaque réponse *D*, des engagements *R'* satisfaisant à des relations du type :

$$R' = G_1^{d_1} \times G_2^{d_2} \times ... \times G_m^{d_m} \times D^v \bmod n$$

ou à des relations du type :

$$R' = D^v / G_1^{d_1} \times G_2^{d_2} \times ... \times G_m^{d_m} \bmod n \text{ , et}$$

• • les moyens de calcul et de comparaison du dispositif contrôleur sont aptes à vérifier que le message *M* et les défis *d* satisfont à la fonction de hachage

$$d = h \, (message, \, R') \, ;$$

et

- dans le cas où le dispositif contrôleur dispose des engagements *R* et des réponses *D* :

• • les moyens de calcul du dispositif contrôleur sont aptes à appliquer la fonction de hachage et à calculer *d' = h (message, R)*, et
• • les moyens de calcul et de comparaison du dispositif contrôleur sont aptes à vérifier que les engagements *R*, les défis *d'* et les réponses *D,* satisfont à des relations du type :

$$R = G_1^{d_1} \times G_2^{d_2} \times ... \times G_m^{d_m} \times D^v \bmod n$$

ou à des relations du type :

$$R = D^v / G_1^{d_1} \times G_2^{d_2} \times ... \times G_m^{d_m} \bmod n \, .$$

**Patentansprüche**

1. Verfahren, das dazu bestimmt ist, einer Controller-Entität

- die Authentizität einer Entität und/oder
- die Integrität einer Nachricht M nachzuweisen, die dieser Entität zugeordnet wird, indem alle oder ein Teil der folgenden Parameter oder Derivate von diesen verwendet werden:
- m Paare privater $Q_1$, $Q_2$, ... $Q_m$ und öffentlicher Werte $G_1$, $G_2$, ..., $G_m$, wobei m größer oder gleich 1 ist,
- ein öffentliches Modul n, bestehend aus dem Produkt von f Primfaktoren $p_1$, $p_2$, ... $p_f$, wobei f größer oder gleich 2 ist,
- ein öffentlicher Exponent v; wobei das Modul, der Exponent und die Werte durch Beziehungen des Typs:

$$G_i \cdot Q_i^v \equiv 1 \cdot \bmod n \text{ oder } G_i \equiv Q_i^v \bmod n$$

verbunden werden,
wobei der Exponent v derart ist, dass

$$v = 2^k$$

wobei k ein Sicherheitsparameter ist, der größer als 1 ist;
wobei der öffentliche Wert $G_i$ das Quadrat $g_i^2$ einer Grundzahl $g_i$ ist, die kleiner als f Primfaktoren $p_1$, $p_2$, ... $p_f$ ist, wobei die Grundzahl $g_i$ derart ist, dass:
die zwei Gleichungen:

$$x^2 \equiv g_i \bmod n \text{ und } x^2 \equiv - g_i \bmod n$$

keine Lösung in x im Ring der ganzen Zahlen modulo n haben und derart, dass:
die Gleichung:

$$x^v \equiv - g_i^2 \bmod n$$

Lösungen in x im Ring der ganzen Zahlen modulo n hat;
das Verfahren setzt nach den folgenden Schritten eine Entität ein, die Controller genannt wird, die über die f Primfaktoren $p_i$ und/oder die Parameter der chinesischen Restsätze der Primfaktoren und/oder das öffentliche Modul n und/oder die m privaten Werte $Q_i$ und/oder die f.m Komponenten $Q_{i,j}$, mit $Q_{i,j} \equiv Q_i \bmod p_j$, die privaten Werte $Q_i$ und den öffentlichen Exponenten v verfügt;
- der Controller berechnet Verpflichtungen R im Ring der ganzen Zahlen modulo n; wobei jede Verpflichtung berechnet wird

   • entweder durch Ausführen der Operationen des Typs

$$R \equiv r^v \bmod n$$

wobei r eine Zufallszahl ist, derart dass $0 < r < n$,
   • oder

    •• durch Ausführen der Operationen des Typs

$$R_1 \equiv r_1^v \bmod p_1$$

wobei $r_1$ eine Zufallszahl ist, die der Primzahl $p_1$ zugeordnet ist, sodass $0 < r_1 < p_1$, wobei jede $r_1$ zu einer Sammlung von Zufallszahlen $\{r_1, r_2, ... r_f\}$ gehört,
    •• und dann durch Anwenden der Methode des chinesischen Restsatzes;

- der Controller erhält eine oder mehrere Herausforderungen d, wobei jede Herausforderung d m ganze Zahlen $d_i$ aufweist, die im Folgenden elementare Herausforderungen genannt werden; der Controller berechnet ausgehend von jeder Herausforderung d eine Antwort D,

   • entweder durch Ausführen der Operationen des Typs:

$$D \equiv r \cdot Q_1^{d1} \cdot Q_2^{d2} \cdot \ldots Q_m^{dm} \bmod n$$

   • oder

    •• durch Ausführen der Operationen des Typs

$$D_i \equiv r_i \cdot Q_{i,1}^{d1} \cdot Q_{i,2}^{d2} \cdot \ldots Q_{i,m}^{dm} \bmod p_i$$

    •• und dann durch Anwenden der Methode des chinesischen Restsatzes;

wobei das Verfahren derart ist, dass es ebenso viele Antworten D wie Herausforderungen d und wie Verpflichtungen

R gibt, wobei jede Gruppe von Zahlen R, d, D ein Triplett, das {R, d, D} genannt wird, bildet,
wobei das Verfahren das Übertragen der einen oder mehreren Verpflichtungen R und der einen oder mehreren Antworten D an die Controller-Entität aufweist.

**2.** Endgerät, das einer Entität zugeordnet ist, insbesondere in Form eines nomadischen Objektes, beispielsweise in Form einer Mikroprozessor-Bankkarte, die dazu bestimmt ist, einer Controller-Entität

  - die Authentizität der Entität und/oder
  - die Integrität einer Nachricht M nachzuweisen, die dieser Entität zugeordnet ist,

indem alle oder ein Teil der folgenden Parameter oder Derivate von diesen verwendet werden:

  - m Paare privater $Q_1$, $Q_2$, ... $Q_m$ und öffentlicher Werte $G_1$, $G_2$, ..., $G_m$, wobei m größer oder gleich 1 ist,
  - ein öffentliches Modul n, bestehend aus dem Produkt von f Primfaktoren $p_1$,... $p_f$, wobei f größer oder gleich 2 ist, und
  - ein öffentlicher Exponent v;

wobei das Modul, der Exponent und die Werte durch Beziehungen des Typs:

$$G_i x Q_i^v \equiv 1 \bmod n \text{ oder } G_i \equiv Q_i^v \bmod n$$

verbunden werden;
wobei der Exponent v derart ist, dass

$$v = 2^k$$

wobei k ein Sicherheitsparameter ist, der größer als 1 ist;
wobei der öffentliche Wert $G_i$ das Quadrat $g_i^2$ einer Grundzahl $g_i$ ist, die kleiner als f Primfaktoren $p_i$, ... $p_f$ ist;
wobei die Grundzahl $g_i$ derart ist, dass die zwei Gleichungen:

$$x^2 \equiv g_i \bmod n \text{ und } x^2 \equiv - g_i \bmod n$$

keine Lösung in x im Ring der ganzen Zahlen modulo n haben;
und derart, dass die Gleichung:

$$x^v \equiv g_i^2 \bmod n$$

Lösungen in x im Ring der ganzen Zahlen modulo n hat;
wobei das Endgerät eine Controller-Vorrichtung aufweist, umfassend:

  - einen Speicherbereich, der die f Primfaktoren $p_i$ und/oder die Parameter der chinesischen Restsätze der Primfaktoren und/oder das öffentliche Modul n und/oder die m privaten Werte $Q_i$ und/oder die f,m Komponenten $Q_{i,j}$, die derart sind, dass $Q_{i,j} \equiv Q_i \bmod p_j$, private Werte $Q_i$ und den öffentlichen Exponenten v enthält;
  - Mittel zum Erzeugen von Zufallszahlen;
  - Mittel zum Berechnen der Verpflichtungen $R$, um Verpflichtungen $R$ im Ring der ganzen Zahlen modulo $n$ zu berechnen, wobei jede Verpflichtung berechnet wird:

    • entweder durch Ausführen der Operationen des Typs:

$$R \equiv r^v \bmod n,$$

wobei $r$ eine Zufallszahl ist, die von den Mitteln zum Erzeugen von Zufallszahlen erzeugt wird, wobei $r$ derart ist, dass $0 < r < n,$

• oder durch Ausführen der Operationen des Typs:

$$R_i \equiv r_i^{\,v} \bmod p_i,$$

wobei $r_1$ eine Zufallszahl ist, die der Primzahl $p_i$ zugeordnet wird, derart, dass $0 < r_1 < p_i$, wobei jede $r_1$ zu einer Sammlung von Zufallszahlen $\{r_1, r_2, \dots r_f\}$ gehört, die durch die Mittel zum Erzeugen von Zufallszahlen erzeugt werden, und dann durch Anwenden der Methode des chinesischen Restsatzes;

- Mittel zum Empfangen der Herausforderungen $d$, um eine oder mehrere Herausforderungen $d$ zu empfangen, wobei jede Herausforderung $d$ $m$ ganze Zahlen $d_i$ aufweist, die elementare Herausforderungen genannt werden;
- Mittel zum Berechnen der Antworten $D$, um ausgehend von jeder Herausforderung $d$ eine Antwort $D$ zu berechnen:

• entweder durch Ausführen der Operationen des Typs:

$$D = r \times Q_1^{\,d_1} \times Q_2^{\,d_2} \times \dots \times Q_m^{\,d_m} \bmod n$$

• oder durch Ausführen der Operationen des Typs

$$D_i = r_i \times Q_{i,1}^{\,d_1} \times Q_{i,2}^{\,d_2} \times \dots \times Q_{i,m}^{\,d_m} \bmod p_i$$

und dann durch Anwenden der Methode des chinesischen Restsatzes; und

- Mittel zum Übertragen, um eine oder mehrere Verpflichtungen $R$ und eine oder mehrere Antworten $D$ zu übertragen;

wobei das Endgerät derart ist, dass es ebenso viele Antworten $D$ wie Herausforderungen $d$ und wie Verpflichtungen $R$ gibt, wobei jede Gruppe von Zahlen $R, d, D$ ein Triplett, das $\{R, d, D\}$ genannt wird, bildet.

3. Endgerät nach Anspruch 2, das dazu bestimmt ist, die Authentizität einer kryptographischen Entität, die Demonstrator genannt wird, einer Entität, die Controller genannt wird, nachzuweisen,
wobei das Endgerät eine Demonstrator-Vorrichtung aufweist, die dem Demonstrator zugeordnet ist, wobei die Demonstrator-Vorrichtung mit der Controller-Vorrichtung durch Verbindungsmittel verbunden ist, die insbesondere die Form von logischen Mikroschaltungen in einem nomadischen Objekt, beispielsweise die Form eines Mikroprozessors in einer Mikroprozessor-Bankkarte, aufweisen können,
wobei die Demonstrator-Vorrichtung Anschlussmittel aufweist, um sie elektrisch, elektromagnetisch, optisch oder akustisch, insbesondere über ein Computerkommunikationsnetz, an eine Controller-Vorrichtung anzuschließen, die dem Controller zugeordnet ist, wobei die Controller-Vorrichtung insbesondere die Form eines Endgeräts oder eines Fernservers aufweist;
**dadurch gekennzeichnet, dass**

- die Controller-Vorrichtung Mittel zum Übertragen aufweist, um die ganze oder einen Teil von jeder Verpflichtung $R$ über die Verbindungsmittel an die Demonstrator-Vorrichtung zu übertragen,
- die Demonstrator-Vorrichtung Mittel zum Übertragen aufweist, um die ganze oder einen Teil von jeder Verpflichtung $R$ über die Verbindungsmittel an die Controller-Vorrichtung zu übertragen,
- die Mittel zum Empfangen der Herausforderungen $d$ von der Controller-Vorrichtung geeignet sind, um jede Herausforderung $d$, die von der Controller-Vorrichtung kommt, über die Anschlussmittel zwischen der Controller-Vorrichtung und der Demonstrator-Vorrichtung und über die Verbindungsmittel zwischen der Demonstrator-Vorrichtung und der Controller-Vorrichtung zu empfangen, und
- die Mittel zum Übertragen des Demonstrators geeignet sind, jede Antwort $D$ an die Controller-Vorrichtung zu übertragen.

4. Endgerät nach Anspruch 2, das dazu bestimmt ist, die Integrität einer Nachricht $M$, die einer Entität zugeordnet ist, die Demonstrator genannt wird, einer Entität, die Controller genannt wird, nachzuweisen,

wobei das Endgerät eine Demonstrator-Vorrichtung aufweist, die dem Demonstrator zugeordnet ist, wobei die Demonstrator-Vorrichtung mit dem Controller durch Verbindungsmittel verbunden ist, die insbesondere die Form von logischen Mikroschaltungen in einem nomadischen Objekt, beispielsweise die Form eines Mikroprozessors in einer Mikroprozessor-Bankkarte, aufweisen können,

wobei die Demonstrator-Vorrichtung Anschlussmittel aufweist, um sie elektrisch, elektromagnetisch, optisch oder akustisch, insbesondere über ein Computerkommunikationsnetz, an eine Controller-Vorrichtung anzuschließen, die dem Controller zugeordnet ist, wobei die Controller-Vorrichtung insbesondere die Form eines Endgeräts oder eines Fernservers aufweist;

**dadurch gekennzeichnet, dass**

- die Controller-Vorrichtung Mittel zum Übertragen aufweist, um die ganze oder einen Teil von jeder Verpflichtung $R$ über die Verbindungsmittel an die Demonstrator-Vorrichtung zu übertragen,

- die Demonstrator-Vorrichtung Mittel zum Berechnen aufweist, die geeignet sind, um eine Hashfunktion $h$ anzuwenden, die als Argumente die Nachricht $M$ und die ganze oder einen Teil von jeder Verpflichtung $R$ aufweist, um mindestens ein Token $T$ zu berechnen,

- die Demonstrator-Vorrichtung auch Mittel zum Übertragen aufweist, um jedes Token $T$ über die Anschlussmittel an die Controller-Vorrichtung zu übertragen, wobei diese Letztere Mittel zum Erzeugen von Herausforderungen aufweist, um nach Empfangen des Tokens $T$ Herausforderungen $d$ in einer Anzahl, die gleich der Anzahl der Verpflichtungen $R$ ist, zu erzeugen,

- die Mittel zum Empfangen der Herausforderungen $d$ von der Controller-Vorrichtung geeignet sind, um jede Herausforderung $d$, die von der Controller-Vorrichtung kommt, über die Anschlussmittel zwischen der Controller-Vorrichtung und der Demonstrator-Vorrichtung und über die Verbindungsmittel zwischen der Demonstrator-Vorrichtung und der Controller-Vorrichtung zu empfangen, und

- die Mittel zum Übertragen des Demonstrators geeignet sind, jede Antwort $D$ an die Controller-Vorrichtung zu übertragen.

5. Endgerät nach Anspruch 2, das dazu bestimmt ist, eine digitale Signatur einer Nachricht $M$, die im Folgenden signierte Nachricht genannt wird, durch eine Entität, die Signatar genannt wird, zu erzeugen,

wobei die signierte Nachricht aufweist:

- die Nachricht $M$,
- die Herausforderungen $d$ und/oder die Verpflichtungen $R$ und
- die Antworten $D$;

wobei das Endgerät eine Signatar-Vorrichtung aufweist, die dem Signatar zugeordnet ist, wobei die Signatar-Vorrichtung mit dem Controller durch Verbindungsmittel verbunden ist, die insbesondere die Form von logischen Mikroschaltungen in einem nomadischen Objekt, beispielsweise die Form eines Mikroprozessors in einer Mikroprozessor-Bankkarte, aufweisen können,

wobei die Signatar-Vorrichtung Anschlussmittel aufweist, um sie elektrisch, elektromagnetisch, optisch oder akustisch, insbesondere über ein Computerkommunikationsnetz, an eine Controller-Vorrichtung anzuschließen, die die einer Entität, die Controller genannt ist, zugeordnet ist, wobei die Controller-Vorrichtung insbesondere die Form eines Endgeräts oder eines Fernservers aufweist;

**dadurch gekennzeichnet, dass**

- die Controller-Vorrichtung Mittel zum Übertragen aufweist, um die ganze oder einen Teil von jeder Verpflichtung $R$ über die Verbindungsmittel an die Signatar-Vorrichtung zu übertragen,

- die Signatar-Vorrichtung Mittel zum Berechnen aufweist, die geeignet sind, um eine Hashfunktion $h$ anzuwenden, die als Argumente die Nachricht $M$ und die ganze oder einen Teil von jeder Verpflichtung R aufweist, um einen Bitstrom zu berechnen und aus diesem Bitstrom Herausforderungen $d$ in einer Anzahl, die gleich der Anzahl der Verpflichtungen $R$ ist, zu extrahieren,

- die Mittel zum Empfangen der Herausforderungen $d$ von der Controller-Vorrichtung geeignet sind, um jede Herausforderung $d$, die von der Signatar-Vorrichtung kommt, über die Anschlussmittel zu empfangen, und

- die Controller-Vorrichtung Mittel zum Übertragen aufweist, um die Antworten $D$ über die Verbindungsmittel an die Signatar-Vorrichtung zu übertragen.

6. Controller-Vorrichtung, die insbesondere die Form eines Endgeräts oder eines Fernservers aufweist, die einer Entität, die Controller genannt wird, zugeordnet ist,
die Mittel aufweist, um zu kontrollieren:

- die Authentizität einer Entität und/oder
- die Integrität einer Nachricht *M,* die dieser Entität zugeordnet ist,

mit Hilfe von:

- *m* Paaren öffentlicher Werte $G_1$, $G_2$, ..., $G_m$, wobei *m* größer oder gleich 1 ist,
- einem öffentlichen Modul *n,* bestehend aus dem Produkt von f Primfaktoren $p_1$, $p_2$, ... $p_f$, wobei f größer oder gleich 2 ist, und
- einem öffentlichen Exponenten v;

wobei das Modul, der Exponent und die Werte durch Beziehungen des Typs:

$$G_i \times Q_i^v = 1 \bmod n \quad \text{oder} \quad G_i = Q_i^v \bmod n$$

verbunden sind;
wobei $Q_i$ einen privaten Wert bezeichnet, der dem öffentlichen Wert $G_i$ zugeordnet ist,
wobei der Exponent v derart ist, dass:

$$v = 2^k,$$

wobei *k* ein Sicherheitsparameter ist, der größer als 1 ist;
wobei der öffentliche Wert $G_i$ das Quadrat $g_1^2$ einer Grundzahl $g_i$ ist, die kleiner als f Primfaktoren $p_1$, ... $p_f$ ist;
wobei die Grundzahl $g_i$ derart ist, dass die zwei Gleichungen:

$$x^2 = g_i \bmod n \quad \text{und} \quad x^2 = -g_i \bmod n$$

keine Lösung in *x* im Ring der ganzen Zahlen modulo *n* haben,
und derart, dass die Gleichung

$$x^v = g_i^2 \bmod n$$

Lösungen in *x* im Ring der ganzen Zahlen modulo *n* hat;
wobei die Controller-Vorrichtung Anschlussmittel aufweist, um sie elektrisch, elektromagnetisch, optisch oder akustisch, insbesondere über ein Computerkommunikationsnetz, an eine Demonstrator-Vorrichtung anzuschließen, die dem Demonstrator zugeordnet ist;
**dadurch gekennzeichnet ist, dass** sie auch aufweist:

- Mittel zum Empfangen über die Anschlussmittel von allen oder einem Teil der Verpflichtungen *R,* die von der Demonstrator-Vorrichtung kommen,
- Mittel zum Erzeugen von Herausforderungen, um nach Empfangen der ganzen oder einem Teil von jeder Verpflichtung *R* Herausforderungen *d* in einer Anzahl, die gleich der Anzahl der Verpflichtungen *R* ist, zu erzeugen, wobei jede Herausforderung *d m* ganze Zahlen $d_i$ aufweist, die elementare Herausforderungen genannt werden,
- Mittel zum Übertragen, um die Herausforderungen *d* über die Anschlussmittel an den Demonstrator zu übertragen,
Mittel zum Empfangen über die Anschlussmittel der Antworten *D,* die von der Demonstrator-Vorrichtung kommen,
- Mittel zum Berechnen und
- Mittel zum Vergleichen,

die derart sind, dass

- in dem Fall, in dem die Mittel zum Empfangen der Controller-Vorrichtung einen Teil von jeder Verpflichtung *R* empfangen haben:

- die Mittel zum Berechnen der Controller-Vorrichtung, die über *m* öffentliche Werte $G_1$, $G_2$, ..., $G_m$ verfügen, geeignet sind, ausgehend von jeder Herausforderung d und von jeder Antwort D eine rekonstruierte Verpflichtung *R'* zu berechnen, die eine Beziehung des Typs:

$$R' = G_1^{d_1} \times G_2^{d_2} \times ... \times G_m^{d_m} \times D^v \bmod n$$

oder eine Beziehung des Typs

$$R' = D^v / G_1^{d_1} \times G_2^{d_2} \times ... \times G_m^{d_m} \bmod n$$

erfüllt, und
- die Mittel zum Vergleichen der Controller-Vorrichtung geeignet sind, um jede rekonstruierte Verpflichtung *R'* mit der gesamten oder einem Teil von jeder empfangenen Verpflichtung *R* zu vergleichen;

- in dem Fall, in dem die Mittel zum Empfangen der Controller-Vorrichtung die Gesamtheit von jeder Verpflichtung *R* empfangen haben:

- die Mittel zum Vergleichen der Controller-Vorrichtung, die über *m* öffentliche Werte $G_1$, $G_2$, ..., $G_m$ verfügen, geeignet sind, zu überprüfen, dass jede Verpflichtung *R* eine Beziehung des Typs:

$$R = G_1^{d_1} \times G_2^{d_2} \times ... \times G_m^{d_m} \times D^v \bmod n$$

oder eine Beziehung des Typs

$$R = D^v / G_1^{d_1} \times G_2^{d_2} \times ... \times G_m^{d_m} \bmod n$$

erfüllt.

7. Controller-Vorrichtung, die insbesondere die Form eines Endgeräts oder eines Fernservers aufweist, die einer Entität, die Controller genannt wird, zugeordnet ist, die Mittel aufweist, um zu kontrollieren:

- die Authentizität einer Entität und/oder
- die Integrität einer Nachricht *M,* die dieser Entität zugeordnet ist,

mit Hilfe von:

- m Paaren öffentlicher Werte $G_1$, $G_2$, ..., $G_m$, wobei *m* größer oder gleich 1 ist,
- einem öffentlichen Modul *n*, bestehend aus dem Produkt von *f* Primfaktoren $p_1$, ... $p_f$, wobei f größer oder gleich 2 ist, und
- einem öffentlichen Exponenten v;

wobei das Modul, der Exponent und die Werte durch Beziehungen des Typs:

$$G_i \times Q_i^v = 1 \bmod n \quad \text{oder} \quad G_i = Q_i^v \bmod n$$

verbunden sind;
wobei $Q_i$ einen privaten Wert bezeichnet, der dem öffentlichen Wert $G_i$ zugeordnet ist,

wobei der Exponent *v* derart ist, dass:

$$v = 2^k$$

wobei *k* ein Sicherheitsparameter ist, der größer als 1 ist;
wobei der öffentliche Wert $G_1$ das Quadrat $g_1{}^2$ einer Grundzahl $g_i$ ist, die kleiner als *f* Primfaktoren $p_1,... p_f$ ist,
wobei die Grundzahl $g_i$ derart ist, dass die zwei Gleichungen:

$$x^2 = g_i \bmod n \quad \text{und} \quad x^2 = -g_i \bmod n$$

keine Lösung in *x* im Ring der ganzen Zahlen modulo *n* haben,
und derart, dass die Gleichung

$$x^v = g_i{}^2 \bmod n$$

Lösungen in *x* im Ring der ganzen Zahlen modulo n hat,
wobei die Controller-Vorrichtung Anschlussmittel aufweist, um sie elektrisch, elektromagnetisch, optisch oder akustisch, insbesondere über ein Computerkommunikationsnetz, an eine Demonstrator-Vorrichtung anzuschließen, die dem Demonstrator zugeordnet ist;
**dadurch gekennzeichnet ist, dass** sie auch aufweist:

- Mittel zum Empfangen über die Anschlussmittel von Token *T,* die von der Demonstrator-Vorrichtung kommen,
- Mittel zum Erzeugen von Herausforderungen, um nach dem Empfangen des Token *T* Herausforderungen *d* in einer Anzahl, die gleich der Anzahl der Verpflichtungen *R* ist, zu erzeugen, wobei jede Herausforderung *d m* ganze Zahlen $d_i$ aufweist, die elementare Herausforderungen genannt werden,
- Mittel zum Übertragen, um die Herausforderungen *d* über die Anschlussmittel an den Demonstrator zu übertragen,
- Mittel zum Empfangen über die Anschlussmittel der Antworten *D,* die von der Demonstrator-Vorrichtung kommen,
- Mittel zum Berechnen, die über *m* öffentliche Werte $G_1$, $G_2$, ..., $G_m$ verfügen, um einerseits ausgehend von jeder Herausforderung *d* und von jeder Antwort *D* eine rekonstruierte Verpflichtung *R'* zu berechnen, die eine Beziehung des Typs:

$$R' = G_1{}^{d_1} \times G_2{}^{d_2} \times ... \times G_m{}^{d_m} \times D^v \bmod n$$

oder eine Beziehung des Typs:

$$R' = D^v / G_1{}^{d_1} \times G_2{}^{d_2} \times ... \times G_m{}^{d_m} \bmod n$$

erfüllt,
und dann andererseits unter Anwendung einer Hashfunktion *h,* die als Argumente die Nachricht *M* und die ganze oder einen Teil von jeder rekonstruierten Verpflichtung *R'* aufweist, mindestens ein Token *T* zu berechnen, und
- Mittel zum Vergleichen, um das berechnete Token *T'* mit dem empfangenen Token *T* zu vergleichen.

8. Controller-Vorrichtung, die insbesondere die Form eines Endgeräts oder eines Fernservers aufweist, die einer Entität, die Controller genannt wird, zugeordnet ist,
die Mittel aufweist, um zu kontrollieren:

- die Authentizität einer Entität und/oder

- die Integrität einer Nachricht *M,* die dieser Entität zugeordnet ist,

mit Hilfe von:

- *m* Paaren öffentlicher Werte $G_1$, $G_2$, ..., $G_m$, wobei *m* größer oder gleich 1 ist,
- einem öffentlichen Modul *n,* bestehend aus dem Produkt von f Primfaktoren $p_1$, ... $p_f$, wobei f größer oder gleich 2 ist, und
- einem öffentlichen Exponenten v;

wobei das Modul, der Exponent und die Werte durch Beziehungen des Typs:

$$G_i \times Q_i^v = 1 \bmod n \quad \text{oder} \quad G_i = Q_i^v \bmod n$$

verbunden sind;
wobei $Q_i$ einen privaten Wert bezeichnet, der dem öffentlichen Wert $G_i$ zugeordnet ist,
wobei der Exponent *v* derart ist, dass:

$$v = 2^k,$$

wobei *k* ein Sicherheitsparameter ist, der größer als 1 ist;
wobei der öffentliche Wert $G_1$ das Quadrat $g_1^2$ einer Grundzahl $g_i$ ist, die kleiner als *f* Primfaktoren $p_1$,... $p_f$ ist;
wobei die Grundzahl $g_i$ derart ist, dass die zwei Gleichungen:

$$x^2 = g_i \bmod n \quad \text{und} \quad x^2 = -g_i \bmod n$$

keine Lösung in *x* im Ring der ganzen Zahlen modulo *n* haben,
und derart, dass die Gleichung:

$$x^v = g_i^2 \bmod n$$

Lösungen in *x* im Ring der ganzen Zahlen modulo *n* hat;
wobei die Controller-Vorrichtung, die dazu bestimmt ist, die Authentizität einer Nachricht *M* zu kontrollieren, indem eine signierte Nachricht, die durch eine Signatar-Vorrichtung gesendet wird, die einer kryptographischen Entität zugeordnet ist, die Signatar genannt wird, kontrolliert wird, über eine Hashfunktion *h* (*Nachricht, R*) verfügt, wobei die signierte Nachricht aufweist:

- die Nachricht *M,*
- Herausforderungen *d* und/oder Verpflichtungen R und
- Antworten *D,*

wobei die Controller-Vorrichtung Anschlussmittel aufweist, um sie elektrisch, elektromagnetisch, optisch oder akustisch, insbesondere über ein Computerkommunikationsnetz, an die Signatar-Vorrichtung anzuschließen, **dadurch gekennzeichnet, dass** sie aufweist:

- Mittel zum Berechnen und
- Mittel zum Vergleichen,

derart, dass, nachdem die Controller-Vorrichtung die signierte Nachricht von der Signatar-Vorrichtung über die Anschlussmittel empfangen hat:

- in dem Fall, in dem die Controller-Vorrichtung über die Verpflichtungen *R,* die Herausforderungen *d,* die Antworten *D* verfügt:

• • die Mittel zum Berechnen und zum Vergleichen der Controller-Vorrichtung geeignet sind, zu überprüfen, dass die Verpflichtungen *R,* die Herausforderungen *d* und die Antworten *D* eine Beziehung des Typs:

$$R = G_1^{d_1} \times G_2^{d_2} \times ... \times G_m^{d_m} \times D^v \bmod n$$

oder Beziehungen des Typs

$$R = D^v / G_1^{d_1} \times G_2^{d_2} \times ... \times G_m^{d_m} \bmod n$$

erfüllen und
• • die Mittel zum Berechnen und zum Vergleichen der Controller-Vorrichtung geeignet sind, zu überprüfen, dass die Nachricht *M,* die Herausforderungen *d* und die Verpflichtungen *R* die Hashfunktion *d = h (Nachricht, R)* erfüllen:

- in dem Fall, in dem die Controller-Vorrichtung über die Verpflichtungen *d* und die Antworten *D* verfügt:

• • die Mittel zum Berechnen der Controller-Vorrichtung geeignet sind, ausgehend von jeder Herausforderung *d* und von jeder Antwort *D* Verpflichtungen *R'* zu berechnen, die Beziehungen des Typs:

$$R' = G_1^{d_1} \times G_2^{d_2} \times ... \times G_m^{d_m} \times D^v \bmod n$$

oder Beziehungen des Typs

$$R' = D^v / G_1^{d_1} \times G_2^{d_2} \times ... \times G_m^{d_m} \bmod n$$

erfüllen und
• • die Mittel zum Berechnen und zum Vergleichen der Controller-Vorrichtung geeignet sind, zu überprüfen, dass die Nachricht *M* und die Herausforderungen *d* die Hashfunktion
*d = h (Nachricht, R')* erfüllen, und

- in dem Fall, in dem die Controller-Vorrichtung über die Verpflichtungen *R* und die Antworten *D* verfügt:

• • die Mittel zum Berechnen der Controller-Vorrichtung geeignet sind, die Hashfunktion anzuwenden und
*d' = h (Nachricht, R)* zu berechnen, und
• • die Mittel zum Berechnen und zum Vergleichen der Controller-Vorrichtung geeignet sind, zu überprüfen, dass die Verpflichtungen *R,* die Herausforderungen *d'* und die Antworten *D* eine Beziehung des Typs:

$$R = G_1^{d_1} \times G_2^{d_2} \times ... \times G_m^{d_m} \times D^v \bmod n$$

oder Beziehungen des Typs:

$$R = D^v / G_1^{d_1} \times G_2^{d_2} \times ... \times G_m^{d_m} \bmod n$$

erfüllen.

**Claims**

1.  Method intended to prove to a checker entity,

    - the authenticity of an entity and/or
    - the integrity of a message **M** associated with this entity, by means of

    using all or some of the following parameters or ones derived from the latter:

    - **m** pairs of private values $Q_1$, $Q_2$,... $Q_m$ and public values $G_1$, $G_2$,... $G_m$, **m** being greater than or equal to 1
    - a public modulus **n** consisting of the product of **f** prime factors $p_1$, $p_2$ ,... $p_f$, **f** being greater than or equal to 2,
    - a public exponent **v**;
    said modulus, said exponent and said values being related by relations of the type:

    $$G_i . \ Q_i{}^V \equiv 1. \ mod \ n \ \ or \ \ G_i \equiv Q_i{}^V \ mod \ n;$$

    said exponent **v** being such that

    $$v = 2^k$$

    where k is a security parameter larger than 1; said public value $G_i$ being the square $g_i{}^2$ of a base number $g_i$ which is less than the **f** prime factors $p_1$, $p_2$ ,... $p_f$; the base number $g_i$ being such that: the two equations:

    $$x^2 \equiv g_i \ mod \ n \ \ and \ \ x^2 \equiv \ - \ g_i \ mod \ n$$

    do not have any solution in x in the ring of integers modulo **n** and such that:
    the equation:

    $$x^v \equiv g_i{}^2 \ mod \ n$$

    has solutions in x in the ring of integers modulo **n**; said method implements according to the following steps an entity called a witness having **f** prime factors $p_i$ and/or parameters of the Chinese remainders of the prime factors and/or of the public modulus **n** and/or of the **m** private values $Q_i$ and/or of the **f.m** components $Q_{i,j}$ with $Q_{i,j} \equiv Q_i \ mod \ p_j$, of the private values $Q_i$ and of the public exponent **v**;
    - the witness calculates commitments **R** in the ring of integers modulo **n**; each commitment being calculated:

        • either by performing operations of the type

        $$R \equiv r^v \ mod \ n$$

        where **r** is a random such that **0 < r< n,**
        • or

            •• by performing operations of the type

            $$R_i \equiv r_i{}^v \ mod \ p_i$$

            where $r_i$ is a random associated with the prime number $p_i$ such that **0 < $r_i$ < $p_i$**, each $r_i$ belonging to a collection of randoms {$r_1$, $r_2$,... $r_f$},
            •• and then by applying the Chinese remainder method;

    - the witness receives one or more challenges **d**; each challenge **d** comprising m integers $d_i$ hereinafter called

elementary challenges; the witness calculates on the basis of each challenge **d** a response **D**,

• either by performing operations of the type:

$$D \equiv r.Q_1{}^{d1}.Q_2{}^{d2}....Q_m{}^{dm} \bmod n$$

• or

•• by performing operations of the type:

$$D_i \equiv r_i.Q_{i,1}{}^{d}{}_1.Q_{i,2}{}^{d2}....Q_{i,m}{}^{dm} \bmod p_i$$

•• and then by applying the Chinese remainder method; said method being such that there are as many responses **D** as challenges **d** as commitments **Ri,** each group of numbers **R, d, D** constituting a triplet denoted {**R, d,** D},
Said method comprising the transmission of said one or more commitments R and of said one or more response to said checker entity.

**2.** Terminal associated with an entity, taking the form in particular of a nomadic object, for example in the form of a bank card with microprocessor, intended to prove to a checker enity

- the authenticity of said entity and/or
- the integrity of a message M associated with said entity by means of using all or some of the following parameters or ones derived from them:
- **m** pairs of private values $Q_1, Q_2, ... Q_m$ and public values $G_1, G_2, ... G_m$, **m** being greater than or equal to 1,
- a public modulus **n** consisting of the product of **f** prime factors $p_1, ... p_f$, **f** being greater than or equal to 2, and
- a public exponent **v;**

said modulus, said exponent and said values being linked by relations of the type:

$$G_1 \times Q_i{}^v \equiv 1 \bmod n \text{ or } G_i \equiv Q_i{}^v \bmod n;$$

said exponent **v** being such that:

$$v = 2^k,$$

where **k** is a security parameter larger than 1;
said public value $G_i$ being the square $g_i{}^2$ of a base number $g_i$ which is smaller than the **f** prime factors $p_1, ... p_f$;
the base number $g_i$ being such that the two equations:

$$x^2 \equiv g_i \bmod n \quad \text{and} \quad x^2 \equiv -g_i \bmod n$$

have no solution in **x** in the ring of integers modulo **n;**
and such that the equation:

$$x^v \equiv g_i{}^2 \bmod n$$

has solutions in x in the ring of integers modulo n;
said terminal comprising a witness device comprising:

- a memory area containing the **f** prime factors $p_i$ and/or the Chinese remainder parameters of the prime factors and/or the public modulus **n** and/or the **m** private values $Q_i$ and/or the **f.m** components $Q_{i,j}$, such that $Q_{i,j} = Q_i$

**mod** $p_j$, of the private values $Q_i$ and the public exponent $v$;
- means for producing randoms;
- means for calculating the commitments $R$ so as to calculate commitments $R$ in the ring of integers modulo $n$, each commitment being calculated:

   • either by performing operations of the type:

$$R \equiv r^v \bmod n,$$

where $r$ is a random produced by the means for producing randoms, $r$ being such that $0 < r < n$,
   • or by performing operations of the type:

$$R_i \equiv r_i{}^v \bmod p_i,$$

where $r_i$ is a random associated with the prime number $p_i$ such that $0 < r_i < p_i$, each $r_i$ belonging to a collection of randoms $\{r_1, r_2, ... r_f\}$ produced by the means for producing randoms, then by applying the Chinese remainder method;

- means for receiving the challenges $d$ so as to receive one or more challenges $d$, each challenge $d$ comprising $m$ integers $d_i$ called elementary challenges;
- means for calculating the responses $D$ so as to calculate on the basis of each challenge $d$ a response $D$:

   • either by performing operations of the type:

$$D \equiv r \times Q_1^{d_1} \times Q_2^{d_2} \times ... \times Q_m^{d_m} \bmod n,$$

   • or by performing operations of the type:

$$D_i = r_i \times Q_{i,1}^{d_1} \times Q_{i,2}^{d_2} \times ... \times Q_{i,m}^{d_m} \bmod p_i,$$

   then by applying the Chinese remainder method; and

- means of transmission for transmitting one or more commitments $R$ and one or more responses $D$;
said terminal being such that there are as many responses $D$ as challenges $d$ as commitments $R$, each group of numbers $R$, $d$, $D$ constituting a triple denoted $\{R,d,D\}$.

3. Terminal according to Claim 2, intended to prove the authenticity of a so-called demonstrator cryptographic entity to a so-called checker entity,
said terminal comprising a demonstrator device associated with said demonstrator,
said demonstrator device being interconnected with said witness device by interconnection means that can take the form in particular of logic microcircuits in a nomadic object, for example in the form of a microprocessor in a bank card with microprocessor,
said demonstrator device comprising connection means for connecting it electrically, electromagnetically, optically or in an acoustic manner, in particular via a computerized communication network, to a checker device associated with said checker, said checker device taking the form in particular of a terminal or of a remote server;
**characterized in that**:

   - the witness device comprises means of transmission for transmitting all or some of each commitment $R$ to the demonstrator device, via the interconnection means,
   - the demonstrator device comprises means of transmission for transmitting all or some of each commitment $R$ to the checker device, via the connection means,
   - the means for receiving the challenges $d$ of the witness device are able to receive each challenge $d$ originating from the checker device via the connection means between the checker device and the demonstrator device and via the interconnection means between the demonstrator device and the witness device, and

- the means of transmission of the demonstrator are able to transmit each response $D$ to the checker device.

4. Terminal according to Claim 2, intended to prove to a so-called checker entity the integrity of a message $M$ associated with a so-called demonstrator entity,

said terminal comprising a demonstrator device associated with said demonstrator, said demonstrator device being interconnected with said witness device by interconnection means that can take the form in particular of logic microcircuits in a nomadic object, for example in the form of a microprocessor in a bank card with microprocessor, said demonstrator device comprising connection means for connecting it electrically, electromagnetically, optically or in an acoustic manner, in particular via a computerized communication network, to a checker device associated with said checker, said checker device taking the form in particular of a terminal or of a remote server; **characterized in that**:

- the witness device comprises means of transmission for transmitting all or some of each commitment $R$ to the demonstrator device, via the interconnection means,
- the demonstrator device comprises calculation means able to apply a hash function $h$ having as arguments the message $M$ and all or part of each commitment $R$, so as to calculate at least one token $T$,
- the demonstrator device also comprises means of transmission for transmitting each token $T$, via the connection means, to the checker device, the latter comprising means for producing challenges so as to produce, after having received the token $T$, challenges equal in number to the number of commitments $R$,
- the means for receiving the challenges $d$ of the witness device are able to receive each challenge $d$ originating from the checker device via the connection means between the checker device and the demonstrator device and via the interconnection means between the demonstrator device and the witness device, and
- the means of transmission of the demonstrator are able to transmit each response $D$ to the checker device.

5. Terminal according to Claim 2, intended to produce the digital signature of a message $M$, hereinafter referred to as the signed message, by a so-called signatory entity; the signed message comprising:

- the message $M$,
- the challenges d and/or the commitments $R$, and
- the responses $D$;

said terminal comprising a signatory device associated with said signatory, said signatory device being interconnected with said witness device by interconnection means that can take the form in particular of logic microcircuits in a nomadic object, for example in the form of a microprocessor in a bank card with microprocessor, said signatory device comprising connection means for connecting it electrically, electromagnetically, optically or in an acoustic manner, in particular via a computerized communication network, to a checker device associated with a so-called checker entity, said checker device taking the form in particular of a terminal or of a remote server; **characterized in that**:

- the witness device comprises means of transmission for transmitting all or some of each commitment $R$ to the signatory device, via the interconnection means,
- the signatory device comprises calculation means able to apply a hash function $h$ having as arguments the message $M$ and all or some of each commitment $R$, so as to calculate a binary train and extract from this binary train challenges $d$ equal in number to the number of commitments $R$,
- the means for receiving the challenges $d$ of the witness device are able to receive each challenge $d$ originating from the signatory device, via the interconnection means, and
- the witness device comprises means of transmission for transmitting the responses $D$ to the signatory device, via the interconnection means.

6. Checker device, taking the form in particular of a terminal or a remote server, associated with a so-called checker entity, possessing means for checking:

- the authenticity of an entity and/or
- the integrity of a message $M$ associated with this entity,

by means of:

- m pairs of public values $G_1$, $G_2$, ..., $G_m$, $m$ being greater than or equal to 1,
- a public modulus $n$ consisting of the product of $f$ prime factors $p_1,...,p_f$, $f$ being greater than or equal to 2, and
- a public exponent $v$;

said modulus, said exponent and said values being linked by relations of the type:

$$G_i \times Q_i{}^v = 1 \bmod n \text{ or } G_i = Q_i{}^v \bmod n;$$

where $Q_i$ designates a private value, associated with the public value $G_i$,
said exponent $v$ being such that:

$$v = 2^k,$$

where $k$ is a security parameter larger than 1;
said public value $G_i$ being the square $g_i{}^2$ of a base number $g_i$ which is smaller than the $f$ prime factors $p_1,...,p_f$;
the base number $g_i$ being such that the two equations:

$$x^2 \equiv g_i \bmod n \qquad \text{and} \qquad x^2 \equiv -g_i \bmod n$$

have no solution in $x$ in the ring of integers modulo $n$,
and such that the equation:

$$x^v \equiv g_i{}^2 \bmod n$$

has solutions in $x$ in the ring of integers modulo $n$;
said checker device comprising connection means for connecting it electrically, electromagnetically, optically or in an acoustic manner, in particular via a computerized communication network, to a demonstrator device associated with said demonstrator;
**characterized in that** it comprises also:

- means for receiving all or some of the commitments $R$ originating from the demonstrator device, via the connection means,
- means for producing challenges so as to produce, after having received all or some of each commitment $R$, challenges d equal in number to the number of commitments $R$, each challenge $d$ comprising $m$ integers $d_i$ called elementary challenges,
- means of transmission for transmitting the challenges $d$ to the demonstrator, via the connection means, means for receiving the responses $D$ originating from the demonstrator device, via the connection means,
- calculation means, and
- means for comparison,

such that:

- in the case where the means of reception of the checker device have received a part of each commitment $R$:

- the means for calculation of the checker device, having available the $m$ public values $G_1$, $G_2$,..., $G_m$, are able to calculate on the basis of each challenge $d$ and of each response $D$ a reconstructed commitment $R'$ satisfying a relation of the type:

$$R' \equiv G_1^{d_1} \times G_2^{d_2} \times ... \times G_m^{d_m} \times D^v \bmod n$$

or a relation of the type:

$$R' \equiv D^v / G_1^{d_1} \times G_2^{d_2} \times ... \times G_m^{d_m} \bmod n,$$

and
- the means of comparison of the checker device are able to compare each reconstructed commitment $R'$ with all or some of each commitment $R$ received;

- in the case where the means of reception of the checker device have received the entirety of each commitment $R$:

- the means of calculation and the means of comparison of the checker device, having available the $m$ public values $G_1$, $G_2$,..., $G_m$, are able to verify that each commitment $R$ satisfies a relation of the type:

$$R \equiv G_1^{d_1} \times G_2^{d_2} \times ... \times G_m^{d_m} \times D^v \bmod n$$

or a relation of the type:

$$R \equiv D^v / G_1^{d_1} \times G_2^{d_2} \times ... \times G_m^{d_m} \bmod n.$$

**7.** Checker device, taking the form in particular of a terminal or a remote server, associated with a so-called checker entity, possessing means for checking:

- the authenticity of an entity and/or
- the integrity of a message $M$ associated with this entity,

by means of:

- $m$ pairs of public values $G_1$, $G_2$,..., $G_m$, $m$ being greater than or equal to 1,
- a public modulus $n$ consisting of the product of $f$ prime factors $p_1$,...,$p_f$, $f$ being greater than or equal to 2, and
- a public exponent $v$;

said modulus, said exponent and said values being linked by relations of the type:

$$G_i \times Q_i^v = 1 \bmod n \text{ or } G_i = Q_i^v \bmod n;$$

where $Q_i$ designates a private value, associated with the public value $G_i$,
said exponent $v$ being such that:

$$v = 2^k,$$

where $k$ is a security parameter larger than 1;
said public value $G_i$ being the square $g_i^2$ of a base number $g_i$ which is smaller than the $f$ prime factors $p_1$,...,$p_f$;
the base number $g_i$ being such that the two equations:

$$x^2 \equiv g_i \bmod n \qquad \text{and} \qquad x^2 \equiv -g_i \bmod n$$

have no solution in $x$ in the ring of integers modulo $n$,
and such that the equation:

$$x^v \equiv g_i^2 \bmod n$$

has solutions in $x$ in the ring of integers modulo $n$;
said checker device comprising connection means for connecting it electrically, electromagnetically, optically or in an acoustic manner, in particular via a computerized communication network, to a demonstrator device associated with said demonstrator;
**characterized in that** it also comprises:

- means of reception of tokens $T$ originating from said demonstrator device, via the connection means,
- means for producing challenges so as to produce, after having received the token $T$, challenges $d$ equal in number to the number of commitments $R$, each challenge $d$ comprising $m$ integers $d_i$ called elementary challenges,
- means of transmission for transmitting the challenges $d$ to said demonstrator, via the connection means,
- means of receiving the responses $D$ originating from the demonstrator device, via the connection means,
- means of calculation, having available the $m$ public values $G_1$, $G_2$, ..., $G_m$, so as, on the one hand, to calculate on the basis of each challenge $d$ and of each response $D$ a reconstructed commitment $R'$ satisfying a relation of the type:

$$R' \equiv G_1^{d_1} \times G_2^{d_2} \times ... \times G_m^{d_m} \times D^v \bmod n$$

or a relation of the type:

$$R' \equiv D^v / G_1^{d_1} \times G_2^{d_2} \times ... \times G_m^{d_m} \bmod n$$

then, on the other hand, calculate by applying a hash function $h$ having as arguments the message $M$ and all or some of each reconstructed commitment $R'$, a token $T'$, and
- means for comparison for comparing the calculated token $T'$ with the token $T$ received.

8. Checker device, taking the form in particular of a terminal or a remote server, associated with a so-called checker entity, possessing means for checking:

- the authenticity of an entity and/or
- the integrity of a message $M$ associated with this entity,

by means of:

- m pairs of public values $G_1$, $G_2$,..., $G_m$, $m$ being greater than or equal to 1,
- a public modulus n consisting of the product of $f$ prime factors $p_1...,p_f$, $f$ being greater than or equal to 2, and
- a public exponent $v$;

said modulus, said exponent and said values being linked by relations of the type:

$$G_i \times Q_i{}^v = 1 \bmod n \text{ or } G_i = Q_i{}^v \bmod n;$$

where $Q_i$ designates a private value, associated with the public value $G_i$,
said exponent v being such that:

$$v = 2^k,$$

where $k$ is a security parameter larger than 1;
said public value $G_i$ being the square $g_i^2$ of a base number $g_i$ which is smaller than the $f$ prime factors $p_1,...,p_f$;
the base number $g_i$ being such that the two equations:

$$x^2 \equiv g_i \bmod n \qquad \text{and} \qquad x^2 \equiv -g_i \bmod n$$

have no solution in $x$ in the ring of integers modulo $n$,
and such that the equation:

$$x^v \equiv g_i{}^2 \bmod n$$

has solutions in $x$ in the ring of integers modulo $n$;

said checker device intended to check the authenticity of a message $M$ by checking a signed message sent by a signatory device associated with a so-called signatory cryptographic entity having available a hash function $h$ (*message, R*),

said signed message comprising:

- the message $M$,
- challenges $d$ and/or commitments $R$, and
- responses $D$;

said checker device comprising means of connection for connecting it electrically, electromagnetically, optically or in an acoustic manner, in particular via a computerized communication network, to said signatory device; **characterized in that** it comprises:

- means for calculation, and
- means for comparison,

such that, said checker device having received the signed message from the signatory device, via the connection means:

- in the case where the checker device has available the commitments $R$, the challenges $d$, the responses $D$:

•• the means of calculation and of comparison of the checker device are able to verify that the commitments $R$, the challenges $d$ and the responses $D$ satisfy relations of the type:

$$R \equiv G_1^{d_1} \times G_2^{d_2} \times \ldots \times G_m^{d_m} \times D^v \bmod n$$

or relations of the type:

$$R \equiv D^v / G_1^{d_1} \times G_2^{d_2} \times \ldots \times G_m^{d_m} \bmod n,$$

and

•• the means of calculation and of comparison of the checker device are able to verify that the message $M$, the challenges $d$ and the commitments $R$ satisfy the hash function $d = h$ *(message, R)*;

- in the case where the checker device has available the challenges $d$ and the responses $D$:

• • the means of calculation of the checker device are able to calculate, on the basis of each challenge $d$ and of each response $D$, commitments $R'$ satisfying relations of the type:

$$R' \equiv G_1^{d_1} \times G_2^{d_2} \times \ldots \times G_m^{d_m} \times D^v \bmod n$$

or relations of the type:

$$R' \equiv D^v / G_1^{d_1} \times G_2^{d_2} \times \ldots \times G_m^{d_m} \bmod n,$$

and

• • the means of calculation and of comparison of the checker device are able to verify that the message $M$ and the challenges $d$ satisfy the hash function

```
d = h (message, R');
```

and

- in the case where the checker device has available the commitments $R$ and the responses $D$:

· · the means of calculation of the checker device are able to apply the hash function and to calculate $d' = h$ (message, R), and
· · the means of calculation and of comparison of the checker device are able to verify that the commitments $R$, the challenges $d'$ and the responses $D$, satisfy relations of the type:

$$R \equiv G_1^{d_1} \times G_2^{d_2} \times \dots \times G_m^{d_m} \times D^{\nu} \bmod n$$

or relations of the type:

$$R \equiv D^{\nu}/G_1^{d_1} \times G_2^{d_2} \times \dots \times G_m^{d_m} \bmod n.$$

## RÉFÉRENCES CITÉES DANS LA DESCRIPTION

### Documents brevets cités dans la description

- EP 0311470 B1
- EP 0792044 A
- WO 0046947 A